# EUROPEAN PATENT APPLICATION

(11) **EP 4 546 109 A1**
(43) Date of publication of application: **30.04.2025**
(21) Application number: 23876541.6
(22) Date of filing: 27.09.2023
(51) Int. Cl.: G06F 3/14

(54) **DISPLAY-SCREEN SELECTION METHOD, AND ELECTRONIC DEVICE**

(30) Priority: 09.10.2022 CN 202211230663; 28.12.2022 CN 202211700870
(71) Applicant: Huawei Technologies Co., Ltd., Shenzhen, Guangdong 518129 (CN)
(72) Inventor: LIU, Cheng, Shenzhen, Guangdong 518129 (CN); ZHOU, Xingchen, Shenzhen, Guangdong 518129 (CN); LI, Yinghao, Shenzhen, Guangdong 518129 (CN)
(74) Representative: Isarpatent
(86) International application number: PCT/CN2023/121964
(87) International publication number: WO 2024/078337

(57) **Abstract**

This application provides a display selection method and an electronic device. The method includes: in response to a received first operation, sending, to a second electronic device configured to manage a plurality of displays, a first request for requesting projection; receiving first indication information from the second electronic device, where the first indication information is for indicating the plurality of displays and an electronic device to which each of the plurality of displays belongs; displaying, based on the first indication information, first information for indicating the plurality of displays; and sending second indication information to the second electronic device in response to a received second operation, where the second operation is for selecting, from the plurality of displays, a first target display used as a display that accepts projection, and the second indication information is for indicating the first target display and a first target electronic device to which the first target display belongs. **In** this solution, the display that accepts projection can be randomly selected from the plurality of displays, thereby improving flexibility of selecting a projection receive end, and improving projection efficiency.

## Description

### CROSS-REFERENCE TO RELATED APPLICATIONS

This application claims priority to Chinese Patent Application No. 202211230663.3, filed with the China National Intellectual Property Administration on October 9, 2022 and entitled "METHOD FOR DELIVERING CONTENT IN MULTI-SCREEN MULTI-DEVICE COCKPIT", which is incorporated herein by reference in its entirety; and this application claims priority to Chinese Patent Application No. 202211700870.0, filed with the China National Intellectual Property Administration on December 28, 2022 and entitled "DISPLAY SELECTION METHOD AND ELECTRONIC DEVICE", which is incorporated herein by reference in its entirety.

### TECHNICAL FIELD

This application relates to the field of electronic device technologies, and in particular, to a display selection method and an electronic device.

### BACKGROUND

Currently, with an increasing quantity of configurable displays in intelligent cockpits of vehicles, there are more requirements for displaying more diversified content on the displays in the intelligent cockpits. However, there are few third-party applications in an intelligent cockpit system. Consequently, content that can be displayed by using an application in the intelligent cockpit system is limited. Therefore, an operation for projecting content displayed on an electronic device to a display in an intelligent cockpit for display becomes increasingly common.

Currently, in the intelligent cockpit system, a one-core multi-screen control mechanism is usually used to manage the display in the intelligent cockpit. When the electronic device performs projection to the display in the intelligent cockpit, due to a one-core multi-screen hardware limitation, the electronic device can only choose to perform projection to the intelligent cockpit, and the intelligent cockpit system displays, by default, projected content from a mobile device on a main screen such as a central display screen. Consequently, in this method, flexibility of selecting a projection receive end is poor, resulting in low projection efficiency, and this may be difficult to meet diversified projection requirements of a user.

### SUMMARY

This application provides a display selection method and an electronic device, to implement effect of randomly selecting, from a plurality of displays, a display that accepts projection, thereby improving flexibility of selecting a projection receive end, and improving projection efficiency.

According to a first aspect, this application provides a display selection method, applied to a first electronic device. The method includes: sending a first request to a second electronic device in response to a received first operation, where the second electronic device is configured to manage a plurality of displays, and the first request is for requesting projection; receiving first indication information from the second electronic device, where the first indication information is for indicating the plurality of displays and an electronic device to which each of the plurality of displays belongs; displaying first information based on the first indication information, where the first information is for indicating the plurality of displays; and sending second indication information to the second electronic device in response to a received second operation, where the second operation is for selecting a first target display from the plurality of displays, the second indication information is for indicating the first target display and a first target electronic device to which the first target display belongs, and the first target display is used as a display that accepts projection.

In the method, after sending a projection request to the second electronic device, the first electronic device may determine, based on the first indication information returned by the second electronic device, the plurality of displays managed by the second electronic device and the electronic device to which each display belongs. In this case, the first electronic device may provide the plurality of displays for a user to select. After the user selects the display that accepts projection from the plurality of displays, the first electronic device may indicate, to the second electronic device by using the second indication information, the display selected by the user and the electronic device to which the display belongs, so that the second electronic device can determine a specific display for accepting projection. Therefore, in the method, the user can be supported in selecting any display from the displays managed by the second electronic device as the display that accepts projection from the first electronic device, and therefore diversified projection requirements of the user can be met. In addition, in the method, flexibility of selecting a projection receive end is high, and the user can randomly select the projection receive end from candidate displays. Therefore, a projection process can be facilitated to some extent, thereby improving projection efficiency.

In a possible design, before the receiving first indication information from the second electronic device, the method further includes: establishing a wireless communication connection to the second electronic device based on a first communication protocol, where the first communication protocol is a digital living network alliance DLNA projection protocol or a wireless projection protocol; the receiving first indication information from the second electronic device includes: receiving a first message sent by the second electronic device according to the first communication protocol, where the first message includes a first target field for carrying the first indication information; and determining the first indication information based on the first target field in the first message; and the sending second indication information to the second electronic device includes: sending a second message to the second electronic device according to the first communication protocol, where the second message includes a second target field for carrying the second indication information.

In the method, the first electronic device and the second electronic device can communicate with each other based on a wireless communication protocol, and can carry, in a specific field in a wireless communication protocol message, information for indicating the display and the electronic device to which the display belongs. Therefore, the first electronic device and the second electronic device can transfer, through information exchange, information about different displays and electronic devices to which the displays belong, so that the first electronic device can distinguish between a plurality of different displays, and can select any display as the projection receive end. Therefore, in the method, projection can be supported by using a display as a granularity, thereby improving the flexibility of selecting the projection receive end, and improving the projection efficiency.

In a possible design, before the receiving first indication information from the second electronic device, the method further includes: establishing a wired communication connection to the second electronic device based on a first transmission line; the receiving first indication information from the second electronic device includes: receiving the first indication information sent by the second electronic device through the first transmission line; and the sending second indication information to the second electronic device includes: sending the second indication information to the second electronic device through the first transmission line.

In the method, the first electronic device and the second electronic device can communicate with each other in a wired communication manner, so that the second electronic device can directly send, to the first electronic device, information about different displays and electronic devices to which the displays belong. In this case, the first electronic device can distinguish between a plurality of different displays, and can select any display as the projection receive end. Therefore, in the method, projection can be supported by using a display as a granularity, thereby improving the flexibility of selecting the projection receive end, and improving the projection efficiency.

In a possible design, the plurality of displays belong to the second electronic device; or the plurality of displays include at least one display of the second electronic device, and a display of at least one other electronic device that establishes a communication connection to the second electronic device.

In the method, the displays managed by the second electronic device include at least a display of the second electronic device, and may further include a display of another electronic device. Therefore, the flexibility is high, and a range of the projection receive end can be further extended, thereby supporting projection requirements in more scenarios, and implementing more diversified projection effect.

In a possible design, the first indication information includes a correspondence between display indication information and display identification information of each of the plurality of displays, display indication information of any display is for indicating the display, and display identification information of any display is for indicating the display and an electronic device to which the display belongs; and the second indication information includes display identification information of the first target display.

In the method, the display can be identified based on the display indication information. Therefore, the display indication information may be used as information provided for the user, so that the user can select the display based on the display indication information. The display and the electronic device to which the display belongs can be identified based on the display identification information. Therefore, not only displays of different electronic devices can be distinguished between based on the display identification information, but also different displays of a same electronic device can be distinguished between based on the display identification information. Therefore, the display identification information may be used as basis information for identifying different displays between the first electronic device and the second electronic device, to support selection of the projection receive end by using a display as a granularity, so that the flexibility of selecting the projection receive end can be improved, and projection efficiency can be improved.

In a possible design, before the sending a first request to a second electronic device in response to a received first operation, the method further includes: displaying first content on a first display; and after the sending second indication information to the second electronic device in response to a received second operation, the method further includes: skipping displaying the first content on the first display; and sending the first content to the second electronic device, where the first content is used by the first target electronic device to display the first content on the first target display; or sending first address information to the second electronic device, where the first address information is for indicating to obtain an address of the first content, and the address of the first content is used by the first target electronic device to obtain the first content and display the first content on the first target display.

In the method, the first electronic device may use the first content as projected content and directly send the first content to the second electronic device, so that the projected content can be conveniently and quickly transmitted, thereby improving the projection efficiency. The first electronic device may also use the first content as the projected content and indicate, to the second electronic device, address information corresponding to the obtained address of the first content, so that the second electronic device obtains the first content based on the address information. In this manner, an amount of data transmitted by the first electronic device can be reduced, thereby reducing processing pressure of the first electronic device, and improving processing efficiency of the first electronic device.

In a possible design, after the sending the first content to the second electronic device, or after the sending first address information to the second electronic device, the method further includes: displaying second information on the first display in response to a received third operation, where the second information is for indicating at least one display, and the at least one display includes a display in the plurality of displays except the first target display; and sending third indication information to the second electronic device in response to a received fourth operation, where the fourth operation is for selecting a second target display from the at least one display, the third indication information is for indicating to switch to display the first content on the second target display, and the third indication information is further for indicating the second target display and a second target electronic device to which the second target display belongs.

In the method, after selecting the display that accepts projection and indicating the projected content to the second electronic device, the first electronic device can switch the display that accepts projection and indicate the projected content to the second electronic device. Therefore, flexibility of performing projection in the method is high.

In a possible design, after the receiving first indication information from the second electronic device, the method further includes: displaying the first information in response to a received fifth operation; and sending the third indication information to the second electronic device in response to a received sixth operation, where the sixth operation is for selecting a third target display from the plurality of displays, the third indication information is for indicating the third target display and a third target electronic device to which the third target display belongs, and the third target display is used as a display that accepts projection.

In the method, when the first electronic device performs projection to the first target display managed by the second electronic device, the first electronic device can further perform projection to the third target display managed by the second electronic device. Therefore, effect of projection from a single device to a plurality of displays can be implemented, flexibility is high, and more diversified projection effect can be implemented.

In a possible design, the method further includes: sending a second request to a third electronic device in response to a received seventh operation, where the third electronic device is configured to manage a plurality of displays, and the second request is for requesting projection; receiving fourth indication information from the third electronic device, where the fourth indication information is for indicating the plurality of displays managed by the third electronic device and an electronic device to which each display belongs; displaying third information based on the fourth indication information, where the third information is for indicating the plurality of displays managed by the third electronic device; and sending fifth indication information to the third electronic device in response to a received eighth operation, where the eighth operation is for selecting a fourth target display from the plurality of displays managed by the third electronic device, the fifth indication information is for indicating the fourth target display and a fourth target electronic device to which the fourth target display belongs, and the fourth target display is used as a display that accepts projection.

In the method, when the first electronic device performs projection to the first target display managed by the second electronic device, the first electronic device can further perform projection to the fourth target display managed by the third electronic device. Therefore, effect of projection from a single device to a plurality of displays managed by a plurality of devices can be implemented, flexibility is high, and more diversified projection effect can be implemented.

In a possible design, the second electronic device is an electronic device located in a vehicle cockpit, and/or the first target electronic device is an electronic device located in the vehicle cockpit.

In the method, the second electronic device and/or the first target electronic device are/is located in the vehicle cockpit. Therefore, effect of projecting the first electronic device to a cockpit display can be supported, to meet a projection requirement of the user in the cockpit as much as possible, and implement flexible and diversified projection effect in the cockpit scenario.

According to a second aspect, this application provides a display selection method, applied to a second electronic device. The method includes: receiving a first request from a first electronic device, where the second electronic device is configured to manage a plurality of displays, and the first request is for requesting projection; sending first indication information to the first electronic device in response to the first request, where the first indication information is for indicating the plurality of displays and an electronic device to which each of the plurality of displays belongs; and receiving second indication information from the first electronic device, where the second indication information is for indicating a first target display and a first target electronic device to which the first target display belongs, and the first target display is used as a display that accepts projection.

In the method, after receiving a projection request from the first electronic device, the second electronic device may return first indication information to the first electronic device, so that the first electronic device can determine, based on the first indication information, the plurality of displays managed by the second electronic device and the electronic device to which each display belongs, and can randomly select, from the plurality of displays, the display that accepts projection. The second electronic device may determine, based on the second indication information from the first electronic device, the display selected on a side of the first electronic device and the electronic device to which the display belongs, so that the second electronic device can determine a specific display for accepting projection. Therefore, in the method, the second electronic device can support in selecting any display from the displays managed by the second electronic device as the display that accepts projection from the first electronic device, and therefore diversified projection requirements can be met. In addition, in the method, flexibility of selecting a projection receive end is high, and the side of the first electronic device can randomly select the projection receive end from candidate displays provided by the second electronic device. Therefore, a projection process can be facilitated to some extent, thereby improving projection efficiency.

In a possible design, before the receiving a first request from a first electronic device, the method further includes: establishing a wireless communication connection to the first electronic device based on a first communication protocol, where the first communication protocol is a DLNA projection protocol or a wireless projection protocol; the sending first indication information to the first electronic device includes: sending a first message to the first electronic device according to the first communication protocol, where the first message includes a first target field for carrying the first indication information; and the receiving second indication information from the first electronic device includes: receiving a second message sent by the first electronic device according to the first communication protocol, where the second message includes a second target field for carrying the second indication information; and determining the second indication information based on the second target field in the second message.

In the method, the second electronic device and the first electronic device can communicate with each other based on a wireless communication protocol, and can carry, in a specific field in a wireless communication protocol message, information for indicating the display and the electronic device to which the display belongs. Therefore, the second electronic device and the first electronic device can transfer, through information exchange, information about different displays, so that the first electronic device can distinguish between a plurality of different displays, and can select any display as the projection receive end. Therefore, in the method, projection can be supported by using a display as a granularity, thereby improving the flexibility of selecting the projection receive end, and improving the projection efficiency.

In a possible design, before the receiving a first request from a first electronic device, the method further includes: establishing a wired communication connection to the first electronic device based on a first transmission line; the sending first indication information to the first electronic device includes: sending the first indication information to the first electronic device through the first transmission line; and the receiving second indication information from the first electronic device includes: receiving the second indication information sent by the first electronic device through the first transmission line.

In the method, the second electronic device and the first electronic device can communicate with each other in a wired communication manner, so that the second electronic device can directly send, to the first electronic device, information about different displays and electronic devices to which the displays belong. In this case, the first electronic device can distinguish between a plurality of different displays, and can select any display as the projection receive end. Therefore, in the method, projection can be supported by using a display as a granularity, thereby improving the flexibility of selecting the projection receive end, and improving the projection efficiency.

In a possible design, the plurality of displays belong to the second electronic device; or the plurality of displays include at least one display of the second electronic device, and a display of at least one other electronic device that establishes a communication connection to the second electronic device.

In the method, the displays managed by the second electronic device include at least a display of the second electronic device, and may further include a display of another electronic device. Therefore, the flexibility is high, and a range of the projection receive end can be further extended, thereby supporting projection requirements in more scenarios, and implementing more diversified projection effect.

In a possible design, the first indication information includes a correspondence between display indication information and display identification information of each of the plurality of displays, display indication information of any display is for indicating the display, and display identification information of any display is for indicating the display and an electronic device to which the display belongs; and the second indication information includes display identification information of the first target display.

In the method, the display can be identified based on the display indication information. Therefore, the display indication information may be used as information provided for the user, so that the user can select the display based on the display indication information. The display and the electronic device to which the display belongs can be identified based on the display identification information. Therefore, not only displays of different electronic devices can be distinguished between based on the display identification information, but also different displays of a same electronic device can be distinguished between based on the display identification information. Therefore, the display identification information may be used as basis information for identifying different displays between the second electronic device and the first electronic device, to support selection of the projection receive end by using a display as a granularity, so that the flexibility of selecting the projection receive end can be improved, and the projection efficiency can be improved.

In a possible design, after the receiving second indication information from the first electronic device, the method further includes: determining the first target display and the first target electronic device based on the second indication information; and receiving first content from the first electronic device, where the first content is used by the first target electronic device to display the first content on the first target display; or receiving first address information from the first electronic device, where the first address information is for indicating to obtain an address of the first content, and the address of the first content is used by the first target electronic device to obtain the first content and display the first content on the first target display.

In the method, the second electronic device may use the first content from the first electronic device as projected content, so that the projected content can be conveniently and quickly transmitted, thereby improving the projection efficiency. The second electronic device may also receive address information from the first electronic device, and may determine the projected content based on the address information. In this manner, an amount of data transmitted between the second electronic device and the first electronic device can be reduced, thereby reducing processing pressure of the first electronic device, and improving processing efficiency of the first electronic device.

In a possible design, after the receiving first content from the first electronic device, the method further includes: when the first target electronic device is the second electronic device, displaying the first content on the first target display; or when the first target electronic device is not the second electronic device, sending the first content to the first target electronic device, and indicating the first target electronic device to display the first content on the first target display.

In the method, when a projection target end of the first electronic device is a display of the second electronic device, the second electronic device may directly display, on the display, the projected content, namely, the first content, from the first electronic device; or when a projection target end of the first electronic device is a display that is managed by the second electronic device and that belongs to another electronic device, the second electronic device may directly indicate the another electronic device to display the projected content from the first electronic device on the display. Therefore, in the method, effect of projecting the content of the first electronic device to any display in displays included in different electronic devices can be implemented, flexibility is high, and application scenarios are diversified, so that projection requirements in more scenarios can be supported, and more diversified projection effect can be implemented.

In a possible design, after the receiving first address information from the first electronic device, the method further includes: when the first target electronic device is the second electronic device, obtaining the first content based on the first address information, and displaying the first content on the first target display; or when the first target electronic device is not the second electronic device, sending the first address information to the first target electronic device, and indicating the first target electronic device to obtain the first content based on the first address information and display the first content on the first target display.

In the method, when a projection target end of the first electronic device is a display of the second electronic device, the second electronic device may obtain the projected content, namely, the first content, and display the projected content on the display; or when a projection target end of the first electronic device is a display that is managed by the second electronic device and that belongs to another electronic device, the second electronic device may indicate the another electronic device to display the projected content on the display after obtaining the projected content. Therefore, in the method, effect of projecting the content of the first electronic device to any display in displays included in different electronic devices can be implemented, flexibility is high, and application scenarios are diversified, so that projection requirements in more scenarios can be supported, and more diversified projection effect can be implemented.

In a possible design, after the receiving first content from the first electronic device, or after the receiving first address information from the first electronic device, the method further includes: receiving third indication information from the first electronic device, where the third indication information is for indicating to switch to display the first content on a second target display, and the third indication information is further for indicating the second target display and a second target electronic device to which the second target display belongs; and sending the first content to the second target electronic device in response to the third indication information, and indicating the second target electronic device to display the first content on the second target display; or sending the first address information to the second target electronic device in response to the third indication information, and indicating the second target electronic device to obtain the first content based on the first address information and display the first content on the second target display.

In the method, after determining the target display to which the first electronic device performs projection, the second electronic device can support in switching the display that accepts projection. Therefore, flexibility of performing projection in the method is high.

In a possible design, after the sending first indication information to the first electronic device, the method further includes: receiving the third indication information from the first electronic device, where the third indication information is for indicating a third target display and a third target electronic device to which the third target display belongs, and the third target display is used as a display that accepts projection.

In the method, when the first target display managed by the second electronic device accepts projection from the first electronic device, the third target display managed by the second electronic device can also receive the projection from the first electronic device. Therefore, effect of projection from a single device to a plurality of displays can be implemented, flexibility is high, and more diversified projection effect can be implemented.

In a possible design, the method further includes: receiving a second request from a fourth electronic device, where the second request is for requesting projection; sending the first indication information to the fourth electronic device in response to the second request; and receiving fifth indication information from the fourth electronic device, where the fifth indication information is for indicating a fourth target display and a fourth target electronic device to which the fourth target display belongs, and the fourth target display is used as a display that accepts projection.

In the method, when the first target display managed by the second electronic device accepts projection from the first electronic device, the fourth target display managed by the second electronic device can also receive the projection from the fourth electronic device. Therefore, effect of projection from a plurality of devices to a plurality of displays managed by a single device can be implemented, flexibility is high, and more diversified projection effect can be implemented.

In a possible design, the second electronic device is an electronic device located in a vehicle cockpit, and/or the first target electronic device is an electronic device located in the vehicle cockpit.

In the method, the second electronic device and/or the first target electronic device are/is located in the vehicle cockpit. Therefore, effect of projecting the first electronic device to a cockpit display can be supported, to meet a projection requirement of the user in the cockpit as much as possible, and implement flexible and diversified projection effect in the cockpit scenario.

According to a third aspect, this application provides a display selection method, applied to a first electronic device. The method includes: receiving a first request from a second electronic device, where the first electronic device is configured to manage a plurality of displays, and the first request is for requesting projection; and obtaining first indication information in response to the first request, where the first indication information is for indicating the plurality of displays and an electronic device to which each of the plurality of displays belongs; displaying first information based on the first indication information, where the first information is for indicating the plurality of displays; receiving a first operation, where the first operation is for selecting a first target display from the plurality of displays; determining the first target display based on the first operation; and determining, based on the first indication information, a first target electronic device to which the first target display belongs; or obtaining first location information in response to the first request, where the first location information is for indicating a location of a first user associated with the second electronic device; determining a first target display based on the first location information, where the first target display is associated with the first location information; and determining, based on the first indication information, a first target electronic device to which the first target display belongs, where the first target display is used as a display that accepts projection.

In the method, in an optional implementation, the first electronic device, as a device for controlling a display used as a projection receive end, can provide a function of selecting the projection receive end. Specifically, the first electronic device may provide the plurality of managed displays for the user to select. After the user selects the display that accepts projection from the plurality of displays, the first electronic device may determine the display that accepts projection and the electronic device to which the display belongs. Therefore, the first electronic device can determine a specific display for accepting projection. According to the method, the second electronic device can support the user in selecting any display from the displays managed by the second electronic device as the display that accepts projection from the first electronic device, and therefore diversified projection requirements of the user can be met. In addition, flexibility of selecting the projection receive end in the method is high, and the user can randomly select the projection receive end from candidate displays. Therefore, a projection process can be facilitated to some extent, thereby improving projection efficiency. In another optional implementation, the first electronic device, as a device for controlling a display used as a projection receive end, can determine the electronic device to which each managed display belongs, and therefore can perform projection control by using a display as a granularity. After receiving a projection request of the second electronic device, the first electronic device can automatically determine, based on the location of the first user associated with the second electronic device, the display that accepts projection. Therefore, the user does not need to manually select the display that accepts projection, so that projection can be conveniently and quickly implemented, and projection efficiency can be improved.

In a possible design, the plurality of displays belong to the first electronic device; or the plurality of displays include at least one display of the first electronic device, and a display of at least one other electronic device that establishes a communication connection to the first electronic device.

In the method, the displays managed by the first electronic device include at least a display of the first electronic device, and may further include a display of another electronic device. Therefore, flexibility is high, and a range of the projection receive end can be further extended, thereby supporting projection requirements in more scenarios, and implement more diversified projection effect.

In a possible design, the first indication information includes a correspondence between display indication information and display identification information of each of the plurality of displays, display indication information of any display is for indicating the display, and display identification information of any display is for indicating the display and an electronic device to which the display belongs; and the determining, based on the first indication information, a first target electronic device to which the first target display belongs includes: determining the display identification information of the first target display based on the first indication information; and determining the first target electronic device based on the display identification information of the first target display.

In the method, the display and the electronic device to which the display belongs can be identified based on the display identification information. Therefore, not only displays of different electronic devices can be distinguished between based on the display identification information, but also different displays of a same electronic device can be distinguished between. Therefore, the display identification information may be used as basis information for identifying different displays, to support selection of the projection receive end by using a display as a granularity, so that the flexibility of selecting the projection receive end can be improved, and the projection efficiency can be improved.

In a possible design, the obtaining first location information includes: receiving the first location information from the second electronic device, where the first location information is determined by the second electronic device based on an indication of the first user.

In the method, the first location information indicated by the second electronic device is received, so that the first electronic device can conveniently and quickly determine, based on the first location information, the corresponding display used as the projection receive end, to improve a projection speed and efficiency.

In a possible design, after the determining, based on the first indication information, a first target electronic device to which the first target display belongs, the method further includes: receiving first content from the second electronic device, where the first content is used by the first target electronic device to display the first content on the first target display, or receiving first address information from the second electronic device, where the first address information is for indicating to obtain an address of the first content, and the address of the first content is used by the first target electronic device to obtain the first content and display the first content on the first target display.

In the method, the first electronic device may use the first content from the second electronic device as projected content, so that the projected content can be conveniently and quickly transmitted, thereby improving the projection efficiency. The first electronic device may also receive the address information from the second electronic device, and may determine the projected content based on the address information. In this manner, an amount of data transmitted between the first electronic device and the second electronic device can be reduced, thereby reducing processing pressure of the second electronic device, and improving processing efficiency of the second electronic device.

In a possible design, after the receiving first content from the second electronic device, the method further includes: when the first target electronic device is the first electronic device, displaying the first content on the first target display; or when the first target electronic device is not the first electronic device, sending the first content to the first target electronic device, and indicating the first target electronic device to display the first content on the first target display.

In the method, when a projection target end of the second electronic device is a display of the first electronic device, the first electronic device may directly display, on the display, the projected content, namely, the second content, from the second electronic device; or when a projection target end of the second electronic device is a display that is managed by the first electronic device and that belongs to another electronic device, the first electronic device may directly indicate the another electronic device to display, on the display, the projected content from the second electronic device. Therefore, in the method, effect of projecting the content of the second electronic device to any display in displays included in different electronic devices can be implemented, flexibility is high, and application scenarios are diversified, so that projection requirements in more scenarios can be supported, and more diversified projection effect can be implemented.

In a possible design, after the receiving first address information from the second electronic device, the method further includes: when the first target electronic device is the first electronic device, obtaining the first content based on the first address information, and displaying the first content on the first target display; or when the first target electronic device is not the first electronic device, sending the first address information to the first target electronic device, and indicating the first target electronic device to obtain the first content based on the first address information and display the first content on the first target display.

In the method, when a projection target end of the second electronic device is a display of the first electronic device, the first electronic device may obtain the projected content, namely, the first content, and display the projected content on the display; or when a projection target end of the second electronic device is a display that is managed by the first electronic device and that belongs to another electronic device, the first electronic device may indicate the another electronic device to display the projected content on the display after obtaining the projected content. Therefore, in the method, effect of projecting the content of the second electronic device to any display in displays included in different electronic devices can be implemented, flexibility is high, and application scenarios are diversified, so that projection requirements in more scenarios can be supported, and more diversified projection effect can be implemented.

In a possible design, after the receiving first content from the second electronic device, or after the receiving first address information from the second electronic device, the method further includes: displaying second information in response to a received second operation, where the second information is for indicating at least one display, and the at least one display includes a display in the plurality of displays except the first target display; receiving a third operation, where the third operation is for selecting a second target display from the at least one display and indicating to switch to display the first content on the second target display; determining the second target display based on the third operation, and determining, based on the second target display, a second target electronic device to which the second target display belongs; and sending the first content to the second target electronic device, and indicating the second target electronic device to display the first content on the second target display; or sending the first address information to the second target electronic device, and indicating the second target electronic device to obtain the first content based on the first address information and display the first content on the second target display.

In the method, after determining the target display to which the second electronic device performs projection, the first electronic device can support in switching the display that accepts projection. Therefore, flexibility of performing projection in the method is high.

In a possible design, after the obtaining first indication information in response to the first request, the method further includes: receiving a second request from the second electronic device, where the second request is for requesting projection; displaying the first information in response to the second request; receiving a fourth operation, where the fourth operation is for selecting a third target display from the plurality of displays; determining the third target display based on the fourth operation; and determining, based on the first indication information, a third target electronic device to which the third target display belongs; or obtaining second location information in response to the second request, where the second location information is for indicating a location of the first user associated with the second electronic device; determining a third target display based on the second location information, where the third target display is associated with the second location information; and determining, based on the first indication information, a third target electronic device to which the third target display belongs, where the third target display is used as a display that accepts projection.

In the method, when the first target display managed by the first electronic device accepts projection from the second electronic device, the third target display managed by the first electronic device can also receive the projection from the second electronic device. Therefore, effect of projection from a single device to a plurality of displays can be implemented, flexibility is high, and more diversified projection effect can be implemented.

In a possible design, the method further includes: receiving a third request from a third electronic device, where the third request is for requesting projection; and displaying the first information in response to the third request; receiving a fifth operation, where the fifth operation is for selecting a fourth target display from the plurality of displays; determining the fourth target display based on the fifth operation; and determining, based on the first indication information, a fourth target electronic device to which the fourth target display belongs; or obtaining third location information in response to the third request, where the third location information is for indicating a location of a second user associated with the third electronic device; determining a fourth target display based on the third location information, where the fourth target display is associated with the third location information; and determining, based on the first indication information, a fourth target electronic device to which the fourth target display belongs, where the fourth target display is used as a display that accepts projection.

In the method, when the first target display managed by the first electronic device accepts projection from the second electronic device, the fourth target display managed by the first electronic device can also receive the projection from the fourth electronic device. Therefore, effect of projection from a plurality of devices to a plurality of displays managed by a single device can be implemented, flexibility is high, and more diversified projection effect can be implemented.

In a possible design, the first electronic device is an electronic device located in a vehicle cockpit, and/or the first target electronic device is an electronic device located in the vehicle cockpit.

In the method, the first electronic device and/or the first target electronic device are/is located in the vehicle cockpit. Therefore, effect of projecting the second electronic device to a cockpit display can be supported, to meet a projection requirement of the user in the cockpit as much as possible, and implement flexible and diversified projection effect in the cockpit scenario.

According to a fourth aspect, this application provides an electronic device. The electronic device includes a display, a memory, and one or more processors. The memory is configured to store computer program code, and the computer program code includes computer instructions. When the computer instructions are executed by the one or more processors, the electronic device is enabled to perform the method according to any one of the first aspect or the possible designs of the first aspect, or perform the method according to any one of the second aspect or the possible designs of the second aspect, or perform the method according to any one of the third aspect or the possible designs of the third aspect.

According to a fifth aspect, this application provides a computer-readable storage medium. The computer-readable storage medium stores a computer program. When the computer program is run on a computer, the computer is enabled to perform the method according to any one of the first aspect or the possible designs of the first aspect, or perform the method according to any one of the second aspect or the possible designs of the second aspect, or perform the method according to any one of the third aspect or the possible designs of the third aspect.

According to a sixth aspect, a computer program product including instructions is provided. When the computer program product is run on a first electronic device, the electronic device is enabled to perform the method according to any one of the first aspect or the possible designs of the first aspect, or perform the method according to any one of the second aspect or the possible designs of the second aspect, or perform the method according to any one of the third aspect or the possible designs of the third aspect.

According to a seventh aspect, a chip is provided. When the chip runs, the chip performs the method according to any one of the first aspect or the possible designs of the first aspect, or performs the method according to any one of the second aspect or the possible designs of the second aspect, or performs the method according to any one of the third aspect or the possible designs of the third aspect.

For beneficial effect of the fourth aspect to the seventh aspect, refer to descriptions of beneficial effect of the first aspect, the second aspect, or the third aspect. Details are not described herein again.

### BRIEF DESCRIPTION OF DRAWINGS

FIG. 1 is a diagram of a hardware architecture of an electronic device according to an embodiment of this application;
FIG. 2 is a diagram of a software architecture of an electronic device according to an embodiment of this application;
FIG. 3a is a diagram of a display in a vehicle cockpit according to an embodiment of this application;
FIG. 3b is a diagram of a display discovery and management method according to an embodiment of this application;
FIG. 4A to FIG. 4C are a diagram of a display selection and projection method according to an embodiment of this application;
FIG. 5a is a diagram of a projection control interface according to an embodiment of this application;
FIG. 5b is a diagram of a projection control interface according to an embodiment of this application;
FIG. 6a is a diagram of a projection control interface according to an embodiment of this application;
FIG. 6b is a diagram of a projection control interface according to an embodiment of this application;
FIG. 6c is a diagram of a projection control interface according to an embodiment of this application;
FIG. 6d is a diagram of a projection control interface according to an embodiment of this application;
FIG. 7a is a diagram of a projection control interface according to an embodiment of this application;
FIG. 7b is a diagram of a projection interface in a cockpit according to an embodiment of this application;
FIG. 8a is a diagram of a projection control interface according to an embodiment of this application;
FIG. 8b is a diagram of a projection interface in a cockpit according to an embodiment of this application;
FIG. 9a is a diagram of a projection control interface according to an embodiment of this application;
FIG. 9b is a diagram of a projection interface in a cockpit according to an embodiment of this application;
FIG. 10a is a diagram of a to-be-projected interface according to an embodiment of this application;
FIG. 10b is a diagram of a projection interface in a cockpit according to an embodiment of this application;
FIG. 11 is a diagram of a display selection method according to an embodiment of this application;
FIG. 12 is a diagram of a display selection method according to an embodiment of this application;
FIG. 13 is a diagram of a display selection method according to an embodiment of this application;
FIG. 14 is a diagram of a display selection method according to an embodiment of this application; and
FIG. 15 is a diagram of a structure of an electronic device according to an embodiment of this application.

### DESCRIPTION OF EMBODIMENTS

To make objectives, technical solutions, and advantages of embodiments of this application clearer, the following further describes embodiments of this application in detail with reference to the accompanying drawings. The terms "first" and "second" below in the descriptions of embodiments of this application are merely used for a purpose of description, and shall not be understood as an indication or implication of relative importance or implicit indication of a quantity of indicated technical features. Therefore, a feature limited by "first" or "second" may explicitly or implicitly include one or more features.

For ease of understanding, descriptions of concepts related to this application are provided as examples for reference.
(1) An electronic device may be a device having an output display function and a communication function. In some embodiments of this application, the electronic device may be a device having one or more displays.

In some embodiments of this application, the electronic device may be a portable device, for example, a mobile phone, a tablet computer, a wearable device (for example, a watch, a band, a helmet, or an earphone) having a wireless communication function, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). Alternatively, the electronic device may be a smart home device (for example, a smart television or a smart speaker), a smart car, a smart robot, a workshop device, a wireless terminal in self driving (Self Driving), a wireless terminal in remote medical surgery (Remote Medical Surgery), a wireless terminal in a smart grid (Smart Grid), a wireless terminal in transportation security (Transportation Safety), a wireless terminal in a smart city (Smart City), a wireless terminal in a smart home (Smart Home), a flight device (for example, a smart robot, a hot balloon, an uncrewed aerial vehicle, or an airplane), or the like.

In some embodiments of this application, the electronic device may alternatively be a portable terminal device that further includes another function such as a personal digital assistant function and/or a music player function. An example embodiment of the portable terminal device includes but is not limited to a portable terminal device using iOS^{®}, Android^{®}, Microsoft^{®}, or another operating system. Alternatively, the portable terminal device may be another portable terminal device, for example, a laptop computer (Laptop) with a touch-sensitive surface (for example, a touch panel). It should be further understood that in some other embodiments of this application, the electronic device may alternatively be a desktop computer with a touch-sensitive surface (for example, a touch panel), instead of the portable terminal device.

(2) A uniform resource locator (uniform resource locator, URL) is a representation method for specifying a location of information on a World Wide Web service program of the Internet. The URL is an abstract identifier that is for providing a resource location to locate a resource. Generally, the URL includes a string of characters, and these characters can be letters, digits, special characters, and the like. After locating one resource in a system, various operations may be performed on the resource. These operations can be abstracted as access, update, replacement, attribute discovery, and the like. In a process of performing these operations, the resource needs to be located based on the URL.

It should be understood that in embodiments of this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following pieces (items)" or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

Currently, in an intelligent cockpit system, a one-core multi-screen control mechanism is usually used to manage a display in an intelligent cockpit. When an electronic device performs projection to the display in the intelligent cockpit, due to a one-core multi-screen hardware limitation, the electronic device can only choose to perform projection to the intelligent cockpit, and the intelligent cockpit system displays, by default, projected content from a mobile device on a main screen such as a central display screen. Consequently, in this method, flexibility of selecting a projection receive end is poor, resulting in low projection efficiency, and this may be difficult to meet diversified projection requirements of a user.

The foregoing problem further causes a problem that the electronic device can only perform projection to a fixed display in the intelligent cockpit, but cannot perform projection to another display in the intelligent cockpit. For this problem, currently, another display may be set to mirror a main screen after the electronic device performs projection to the main screen. After the mirroring, content displayed on the main screen is completely the same as that displayed on the another display, and other operations cannot be separately performed on the displays. Therefore, practicability is low. Currently, after the electronic device performs projection to the main screen, a series of window movement operations may be performed on the main screen, to display related content on any other display in the cockpit. Although in the method, projection from the electronic device can be indirectly implemented to any display in the intelligent cockpit, an operation process is quite complex, and efficiency is quite low.

Currently, there is still a projection manner: After the electronic device is communicatively connected to the intelligent cockpit, the electronic device migrates an application to a virtual screen, and then transfers, through the virtual screen, an application picture to the display in the intelligent cockpit for display. Although the method can also implement effect of projection from the electronic device to any display in the intelligent cockpit, a large quantity of resources of the electronic device need to be occupied, and power consumption, memory, and the like of the electronic device are greatly consumed. Consequently, projection efficiency and practicability are low.

Therefore, for a current method for implementing projection from an electronic device to a display in an intelligent cockpit, there are problems of a complex execution process, low projection efficiency, low practicability, and the like.

In view of the foregoing problems, embodiments of this application provide a display selection method and an electronic device, so that in a multi-screen single-device (that is, a plurality of displays belong to a same device or control end) or multi-screen multi-device (that is, a plurality of displays belong to a plurality of different devices or control ends) environment, a source end device can randomly select a display that accepts projection from a plurality of displays, flexibility of projection is improved, effect of projection from the source end device to the selected display can be conveniently and quickly improved, projection efficiency can be improved, and resource occupation of the source end device is not affected.

The method provided in embodiments of this application may be applied to a projection system including a plurality of electronic devices, and the projection system includes at least a first electronic device and a second electronic device. The second electronic device includes a plurality of displays, or the second electronic device is configured to control and manage a plurality of displays. In the projection system, the first electronic device may be used as a device that initiates projection, the second electronic device may be used as a device that accepts projection, and the first electronic device may perform projection to any display in the plurality of displays of the second electronic device. The first electronic device may project displayed content to any display in the second electronic device for display, or the first electronic device may separately project same content to a plurality of different displays of the second electronic device for display, or the first electronic device may separately project different content to a plurality of different displays of the second electronic device for display.

In some embodiments of this application, the first electronic device may be a mobile electronic device, for example, a mobile phone or a tablet. The second electronic device may be a vehicle, a cockpit system in a vehicle, a control device in a vehicle cockpit, or the like, and the plurality of displays of the second electronic device may be displays configured in the vehicle cockpit.

In some embodiments of this application, the projection system may further include a third electronic device. The third electronic device includes at least one display, or the third electronic device is configured to control and manage at least one display.

In a possible case, the third electronic device may be used as a device that accepts projection. In this case, in the projection system, the first electronic device may perform projection to any display in a plurality of candidate displays, and the plurality of candidate displays include the plurality of displays of the second electronic device and the at least one display of the third electronic device. The first electronic device may project same content to any display in the plurality of candidate displays for display, or the first electronic device may separately project same content to a plurality of different displays in the plurality of candidate displays for display, or the first electronic device may separately project different content to a plurality of different displays in the plurality of candidate displays for display.

In some embodiments of this application, in a scenario in which the third electronic device is used as a device that accepts projection, the third electronic device may be a mobile electronic device in the vehicle cockpit, for example, a tablet carried by a user in the cockpit or a rear tablet in the cockpit.

In some embodiments of this application, in a scenario in which the third electronic device is used as a device that accepts projection, the third electronic device may be a control device in the vehicle cockpit, and the at least one display of the third electronic device may be a display configured in the vehicle cockpit. In this scenario, the second electronic device and the third electronic device may be respectively configured to control and manage different displays in the vehicle cockpit. For example, the second electronic device may be a device configured to manage a display corresponding to a front-row seat in the vehicle cockpit, and the third electronic device may be a device configured to manage a display corresponding to a rear-row seat in the vehicle cockpit. In this scenario, the cockpit system may use a multi-core multi-screen or multi-device mechanism to manage the plurality of displays.

In a possible case, the third electronic device may be used as a device that initiates projection. In this case, in the projection system, in addition to the first electronic device that may perform projection to any display in the plurality of displays of the second electronic device, the third electronic device may also perform projection to any display in the plurality of displays of the second electronic device. The third electronic device may project same content to any display of the second electronic device for display, where the content may be content on any display of the third electronic device; or the third electronic device may separately project same content to a plurality of different displays of the second electronic device for display; or the third electronic device may separately project different content to a plurality of different displays of the second electronic device for display. The different content may be different content on a same display of the third electronic device, or the different content may be content on different displays of the third electronic device. In some embodiments of this application, when both the first electronic device and the third electronic device perform projection to a same display of the second electronic device, the second electronic device may determine, according to a specified rule, a specific electronic device from which projected content is displayed on the display. For example, the second electronic device may select, according to a rule such as a projection time sequence or a priority sequence of a projection device (namely, the device that initiates projection), a specific electronic device from which projection is accepted. This is not specifically limited in embodiments of this application.

In some embodiments of this application, in a scenario in which the third electronic device is used as a device that initiates projection, the third electronic device may be a mobile electronic device.

In the projection system, content projected by the first electronic device to the display of the second electronic device may be some or all content displayed on the display of the first electronic device, or may be content to be displayed on the display of the first electronic device. The same goes for the third electronic device. After the first electronic device or the third electronic device performs projection to the second electronic device, the second electronic device may generate a projection window on the display, and display, in the projection window, the content projected from the first electronic device. Optionally, the second electronic device may further display an application window of the second electronic device on the display, and display local content of the second electronic device in the application window. The second electronic device may display the projection window in a full screen/split screen/windowed mode.

In embodiments of this application, the first electronic device and the second electronic device may communicate with each other in a wired manner or a wireless manner. Optionally, the first electronic device and the second electronic device may communicate after being connected through a data line such as a universal serial bus (universal serial bus, USB) data line. Optionally, the first electronic device and the second electronic device may access a same local area network. For example, the first electronic device and the second electronic device may establish a wireless connection to a same wireless access point. For another example, the first electronic device and the second electronic device may access a same wireless fidelity (wireless fidelity, Wi-Fi) hot spot. For still another example, the first electronic device and the second electronic device may also access a same Bluetooth beacon by using a Bluetooth protocol. The first electronic device and the second electronic device may communicate with each other by using a short-range wireless communication technology such as Bluetooth or Wi-Fi. The same goes for a manner of communication between the third electronic device and the first electronic device or the second electronic device. Details are not described again.

The method provided in embodiments of this application may be further applied to a projection system including a fourth electronic device and a plurality of fifth electronic devices. Each fifth electronic device may include at least one display. In the projection system, the fourth electronic device may be used as a device that initiates projection, and the plurality of fifth electronic devices may be used as devices that accept projection. The fourth electronic device may perform projection to any display in a plurality of displays included in the plurality of fifth electronic devices. The fourth electronic device may project same content to any display in the plurality of displays for display, or the fourth electronic device may separately project same content to a plurality of different displays in the plurality of displays for display, or the fourth electronic device may separately project different content to a plurality of different displays in the plurality of displays for display. For the fourth electronic device in this scenario, refer to the foregoing first electronic device. For the fifth electronic device in this scenario, refer to the foregoing second electronic device or the third electronic device used as a projection receive end. Details are not described herein again.

It should be noted that, in embodiments of this application, a vehicle does not mean a specific means of transportation. Optionally, the vehicle may be a ground-based means of transportation, for example, a car or a high-speed railway. Optionally, the vehicle may alternatively be a water surface-based means of transportation, for example, a ship or a submarine. Optionally, the vehicle may alternatively be an air means of transportation, for example, an airplane or a helicopter.

It should be noted that the foregoing application scenarios are merely examples of some scenarios to which the display selection method provided in embodiments of this application is applicable, and do not constitute a limitation on an application scenario of the display selection method provided in embodiments of this application. In the following embodiments, a display selection method provided in embodiments of this application is described by using an example in which the first electronic device is a device that initiates projection and the second electronic device is a device that accepts projection.

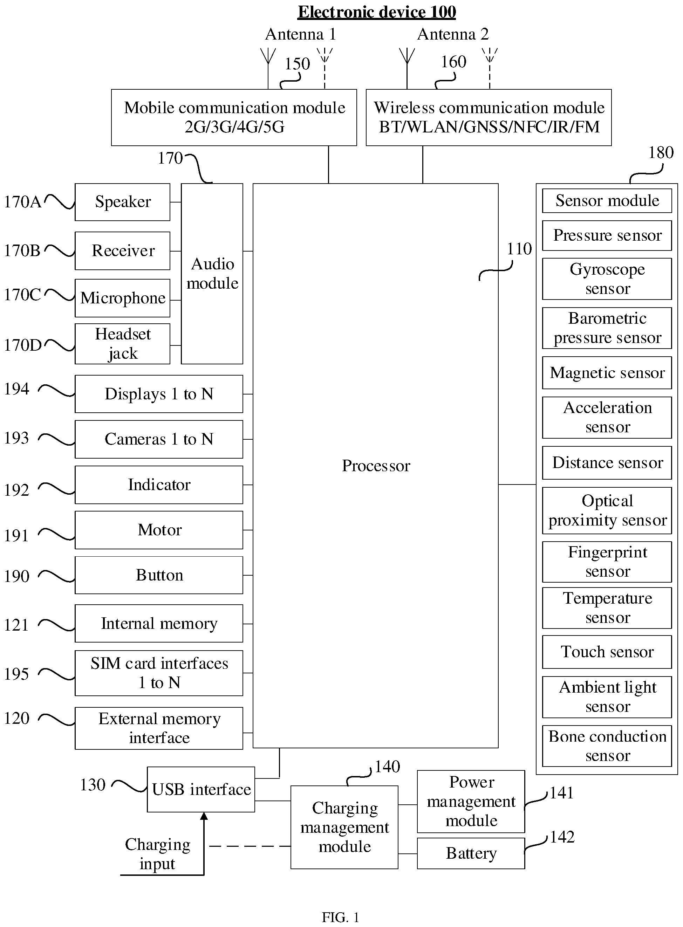

The following describes, with reference to FIG. 1, a structure of an electronic device to which a method according to an embodiment of this application is applicable.

As shown in FIG. 1, the electronic device 100 may include a processor 110, an external memory interface 120, an internal memory 121, a USB interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a SIM card interface 195, and the like.

The sensor module 180 may include a gyroscope sensor, an acceleration sensor, an optical proximity sensor, a fingerprint sensor, a touch sensor, a temperature sensor, a pressure sensor, a distance sensor, a magnetic sensor, an ambient light sensor, a barometric pressure sensor, a bone conduction sensor, and the like.

It may be understood that the electronic device 100 shown in FIG. 1 is merely an example, and does not constitute a limitation on the electronic device. In addition, the electronic device may have more or fewer components than those shown in the figure, or may combine two or more components, or may have different component configurations. The various components shown in FIG. 1 may be implemented in hardware including one or more signal processing circuits and/or application-specific integrated circuits, software, or a combination of hardware and software.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (Neural-network Processing Unit, NPU). Different processing units may be independent components, or may be integrated into one or more processors. The controller may be a nerve center and a command center of the electronic device 100. The controller may generate an operation control signal based on instruction operation code and a time sequence signal, to complete control of instruction fetch and instruction execution.

A memory may be further disposed in the processor 110, and is configured to store instructions and data. In some embodiments, the memory in the processor 110 is a cache memory. The memory may store instructions or data that have/has been recently used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The display selection method provided in embodiments of this application may be performed by the processor 110 by controlling or invoking another component. For example, the processor 110 invokes a processing program stored in the internal memory 121 in embodiments of this application, or invokes, through the external memory interface 120, a processing program stored in a third-party device in embodiments of this application, to control the wireless communication module 160 to perform data communication with another device, thereby improving intelligence and convenience of the electronic device 100, and improving user experience. The processor 110 may include different components. For example, when a CPU and a GPU are integrated, the CPU and the GPU may cooperate to perform the display selection method provided in embodiments of this application. For example, in the display selection method, some algorithms are performed by the CPU, and the other algorithms are performed by the GPU, to obtain high processing efficiency.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1. The display 194 may be configured to display information entered by a user or information provided for the user and various graphical user interfaces (graphical user interfaces, GUIs). For example, the display 194 may display a photo, a video, a web page, a file, or the like.

In embodiments of this application, the display 194 may be an integrated flexible display, or may be a spliced display including two rigid screens and one flexible screen located between the two rigid screens.

The camera 193 (a front-facing camera or a rear-facing camera, or a camera that can serve as a front-facing camera and a rear-facing camera) is configured to capture a static image or a video. Usually, the camera 193 may include a photosensitive element such as a lens group and an image sensor. The lens group includes a plurality of lenses (convex lenses or concave lenses), and is configured to: collect an optical signal reflected by a to-be-photographed object, and transfer the collected optical signal to the image sensor. The image sensor generates an original image of the to-be-photographed object based on the optical signal.

The internal memory 121 may be configured to store computer-executable program code. The executable program code includes instructions. The processor 110 runs the instructions stored in the internal memory 121, to perform various functional applications of the electronic device 100 and data processing. The internal memory 121 may include a program storage area and a data storage area. The program storage area may store an operating system, code of an application (for example, a content sharing function), and the like. The data storage area may store data created in a process of using the electronic device 100, and the like.

The internal memory 121 may further store one or more computer programs corresponding to content sharing algorithms provided in embodiments of this application. The one or more computer programs are stored in the internal memory 121 and are configured to be executed by the one or more processors 110. The one or more computer programs include instructions, and the instructions may be used to perform steps in the following embodiments.

In addition, the internal memory 121 may include a high-speed random access memory, or may include a nonvolatile memory, for example, at least one magnetic disk storage component, a flash storage component, or a universal flash storage (universal flash storage, UFS).

Certainly, code of the content sharing algorithm provided in embodiments of this application may alternatively be stored in the external memory. In this case, the processor 110 may run, through the external memory interface 120, the code of the content sharing algorithm stored in the external memory.

The sensor module 180 may include a gyroscope sensor, an acceleration sensor, an optical proximity sensor, a fingerprint sensor, a touch sensor, and the like.

The touch sensor is also referred to as a "touch panel". The touch sensor may be disposed on the display 194, and the touch sensor and the display 194 form a touch display, which is also referred to as a "touchscreen". The touch sensor is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor may alternatively be disposed on a surface of the electronic device 100, and is at a location different from that of the display 194.

For example, the display 194 of the electronic device 100 displays a home screen, and the home screen includes icons of a plurality of applications (for example, a camera application and a WeChat application). The user taps an icon of the camera application on the home screen through the touch sensor, to trigger the processor 110 to start the camera application and turn on the camera 193. The display 194 displays an interface of the camera application, for example, a viewfinder interface.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G, 3G, 4G, 5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110. In embodiments of this application, the mobile communication module 150 may be further configured to exchange information with another device.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transferred to the application processor. The application processor outputs a sound signal through an audio apparatus (not limited to the speaker 170A, the receiver 170B, and the like), and displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends the processed signal to the processor 110. The wireless communication module 160 may further receive a to-be-sent signal from the processor 110, perform frequency modulation and amplification on the signal, and convert the signal into an electromagnetic wave for radiation through the antenna 2. In embodiments of this application, the wireless communication module 160 is configured to establish a connection to another electronic device, and exchange data. Alternatively, the wireless communication module 160 may be configured to access an access point device, send a control instruction to another electronic device, or receive data sent by another electronic device.

In addition, the electronic device 100 may implement an audio function such as music playing or recording through the audio module 170, the speaker 170A, the receiver 170B, the microphone 170C, the headset jack 170D, the application processor, and the like. The electronic device 100 may receive an input of the button 190, and generate a button signal input related to a user setting and function control of the electronic device 100. The electronic device 100 may generate a vibration prompt (for example, an incoming call vibration prompt) through the motor 191. The indicator 192 in the electronic device 100 may be an indicator light, may be configured to indicate a charging state and a battery level change, and may be further configured to indicate a message, a missed call, a notification, and the like. The SIM card interface 195 in the electronic device 100 is configured to be connected to a SIM card. The SIM card may be inserted into the SIM card interface 195 or withdrawn from the SIM card interface 195, to implement contact with or separation from the electronic device 100.

It should be understood that, during actual application, the electronic device 100 may include more or fewer components than those shown in FIG. 1. This is not limited in embodiments of this application. The electronic device 100 shown in the figure is merely an example, and the electronic device 100 may have more or fewer components than those shown in the figure, or may combine two or more components, or may have different component configurations. The various components shown in the figure may be implemented in hardware including one or more signal processing circuits and/or application-specific integrated circuits, software, or a combination of hardware and software.

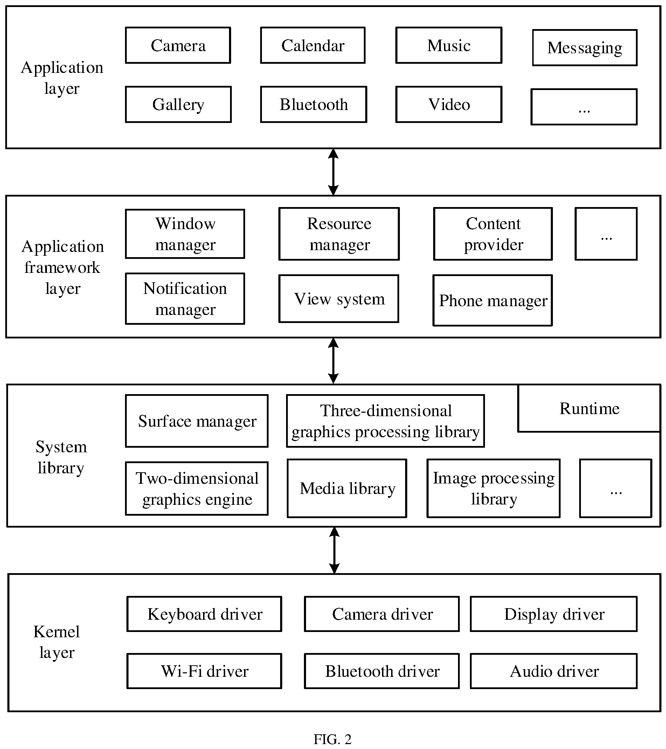

A software system of the electronic device 100 may use a layered architecture, an event-driven architecture, a microkernel architecture, a microservice architecture, or a cloud architecture. In a layered architecture, software is divided into several layers, and each layer has a clear role and task. The layers communicate with each other through a software interface. As shown in FIG. 2, the software architecture may be divided into four layers: an application layer, an application framework layer (framework, FWK), a runtime and a system library, and a Linux kernel layer from top to bottom.

The application layer is an uppermost layer of the operating system, and includes native application programs of the operating system, such as Camera, Gallery, Calendar, Bluetooth, Music, Video, and Messaging. An application program in embodiments of this application is an application for short, and is a software program that can implement one or more specific functions. Usually, a plurality of applications may be installed in the electronic device, for example, a camera application, a mailbox application, and a smart home device control application. The application mentioned in the following may be a system application installed before delivery of the electronic device, or may be a third-party application downloaded from a network or obtained from another electronic device by a user in a process of using the electronic device.

Certainly, a developer may compile an application and install the application at the layer. In a possible implementation, the application may be developed by using a Java language, and is completed by invoking an application programming interface (Application Programming Interface, API) provided by an application framework layer. The developer may interact with a bottom layer (for example, a kernel layer) of the operating system by using the application framework, to develop an application of the developer.

The application framework layer provides an application programming interface and a programming framework for an application of the application layer. The application framework layer may include some predefined functions. The application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include information such as a file (for example, a document, a video, an image, or audio), and a text.

The view system includes visual controls, for example, controls that display content such as text, a picture, and a document. The view system may be configured to construct an application. An interface in a display window may be formed by one or more views. For example, a display interface including an SMS message notification icon may include a text display view and a picture display view.

The phone manager is configured to provide a communication function of the electronic device. The notification manager enables an application to display notification information in a status bar, and may be configured to convey a notification message that may automatically disappear after a short pause without requiring user interaction.

The runtime includes a core library and a virtual machine. The runtime is responsible for scheduling and management of the system.

The kernel library of the system includes two parts: one part is a function that needs to be invoked in a Java language, and the other part is the kernel library of the system. The application layer and the application framework layer run on the virtual machine. Java is used as an example. The virtual machine executes Java files at the application layer and the application framework layer as binary files. The virtual machine is configured to implement functions such as object lifecycle management, stack management, thread management, security and exception management, and garbage collection.

The system library may include a plurality of functional modules, for example, a surface manager, a media library, a three-dimensional graphics processing library (for example, OpenGL ES), a two-dimensional graphics engine (for example, SGL), and an image processing library. The surface manager is configured to manage a display subsystem and provide fusion of two-dimensional and three-dimensional graphics layers for a plurality of applications. The media library supports playback and recording in a plurality of commonly used audio and video formats, static image files, and the like. The media library may support a plurality of audio and video coding formats such as MPEG-4, H.564, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing.

The kernel (kernel) layer provides a core system service of the operating system. For example, security, memory management, process management, a network protocol stack, and a driver model are all based on the kernel layer. The kernel layer is also used as an abstraction layer between hardware and software stacks. The layer has a plurality of drivers related to the electronic device, and has the following main drivers: a display driver, a keyboard driver used as an input device, a flash driver based on a memory technology device, a camera driver, an audio driver, a Bluetooth driver, a Wi-Fi driver, and the like.

It should be understood that the foregoing function service is merely an example. During actual application, the electronic device may be divided into more or fewer function services based on another factor, or may be divided into functions of each service in another manner, or may not be divided into function services, but work as a whole.

The following describes the solutions provided in embodiments of this application by using an example in which the solutions are applied to a vehicle cockpit scenario. For an implementation in which the solutions provided in embodiments of this application are applied to another scenario, refer to the following method for implementation. Details are not enumerated in embodiments of this application.

An implementation process of the solutions provided in embodiments of this application may be mainly divided into two phases: a display discovery and management phase and a display selection and projection execution phase. The following separately describes in detail methods corresponding to the phases.

### Phase 1: Display discovery and management

In the following embodiments of this application, a scenario in which a second electronic device has a plurality of displays is used as an example, to describe the method provided in embodiments of this application. For a method in another scenario, refer to the following method. Details are not described in embodiments of this application.

In embodiments of this application, the second electronic device may control the plurality of displays by using a one-core multi-screen mechanism.

In some embodiments of this application, in the vehicle cockpit scenario, the second electronic device may be an electronic device to which any group of displays that are configured in a cockpit and that use a one-core multi-screen control mechanism belongs. As an electronic device for accepting projection, the second electronic device may be configured to discover and manage all displays that are configured in the cockpit and that may be used as projection receive ends. When a mobile electronic device that may be used as a projection receive end exists in the vehicle cockpit, the second electronic device may be further configured to manage a display of the mobile electronic device. The mobile electronic device includes at least one display. After establishing a communication connection to the second electronic device, the mobile electronic device may report information about all displays of the mobile electronic device to the second electronic device, and the second electronic device may manage the display of the mobile electronic device based on the display information reported by the mobile electronic device. Optionally, the second electronic device and the mobile electronic device may access a cockpit local area network and establish a communication connection based on the cockpit local area network.

In some embodiments of this application, in the vehicle cockpit scenario, the second electronic device may alternatively be any mobile electronic device that exists in the cockpit and that may be used as the projection receive end. In this case, the second electronic device may determine, after accessing the cockpit local area network, the display configured in the cockpit, and may be configured to manage the display configured in the cockpit.

In other words, in the foregoing method, regardless of whether the second electronic device is the electronic device configured in the cockpit or the mobile electronic device in the cockpit, the second electronic device may be configured to manage all displays of all projection receive end devices existing in the cockpit.

In embodiments of this application, the second electronic device may separately configure corresponding display marks and corresponding display indication information for a plurality of managed displays (which include the plurality of displays of the second electronic device and a display of another mobile electronic device in the cockpit), and establish and store a mapping relationship between a display mark and display indication information that correspond to each display. The display mark may be used to identify the display and an electronic device to which the display belongs. The display mark may be used as identification information for identifying a display and a device to which the display belongs between different electronic devices or inside the electronic devices. The display and the electronic device to which the display belongs may be identified between different electronic devices by using the display mark. With the display mark, each electronic device may separately virtualize different displays into devices (where the display mark may be used as identification information of a virtual device), so that different displays of a same device are distinguished between different electronic devices. Therefore, different electronic devices can perform related interaction by using a display as a granularity. The display indication information may be for indicating the display, and the display indication information may be used as information that is provided by the electronic device for a user and that is for indicating the display. With the display indication information, the electronic device may indicate a specific display (for example, the display managed by the second electronic device) to the user, so that the user determines a corresponding display and distinguishes between different displays. For example, when the user needs to view specific currently existing displays, the electronic device may display, on each currently existing display, display indication information corresponding to the display. In this case, the user may determine the currently existing display based on the display indication information, and the user may further select a target display by selecting the display indication information. The display mark and the display indication information may also be understood as follows: The display mark in embodiments of this application is information that is used inside or between electronic devices and that is for identifying a display and an electronic device to which the display belongs. The display indication information in embodiments of this application is information that is presented by the electronic device to the user and that is for identifying the display.

In some embodiments of this application, the display indication information may be information for identifying the display, for example, a display name. In some embodiments of this application, the display mark may include identification information of a display and identification information of a device to which the display belongs. The identification information of the display may be information that is for uniquely identifying the display, for example, a name, a location, and a display identification code of the display (for example, may be a code allocated by the second electronic device to the display). The identification information of the device to which the display belongs may be information, for example, a device name and a device identification code (for example, may be a code allocated by the second electronic device to the device).

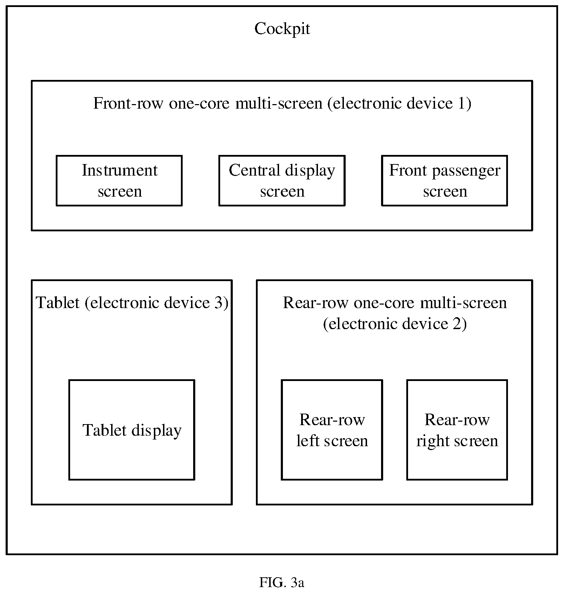

For example, FIG. 3a is a diagram of a display in a vehicle cockpit according to an embodiment of this application. As shown in FIG. 3a, three displays that use a one-core multi-screen control mechanism may be configured in a front row of the cockpit. Display indication information of the three displays may be names of the three displays, for example, an instrument screen, a central display screen, and a front passenger screen. The central display screen is a main screen, and the instrument screen and the front passenger screen are secondary screens. Two displays that use a one-core multi-screen control mechanism may be configured in a rear row of the cockpit. Display indication information of the two displays may be names of the two displays, for example, a rear-row left screen and a rear-row right screen. The rear-row left screen is a main screen, and the rear-row right screen is a secondary screen. There is also a mobile electronic device, for example, a tablet display, carried by the user at a rear-row location in the cockpit. Display indication information of the display may be a name of the display, for example, a tablet display. Certainly, a name of each display in the cockpit is not limited to the name in the foregoing examples. The display indication information may be a name allocated by the second electronic device, or may be a name manually set by the user. This is not specifically limited in embodiments of this application. For example, the three displays configured in the front row belong to an electronic device 1, the two displays configured in the rear row belong to an electronic device 2, and the mobile electronic device in the rear row is an electronic device 3. The second electronic device may be any electronic device in the electronic devices 1 to 3. For example, the second electronic device may be the electronic device 1. In this case, device identification information configured by the electronic device 1 for the electronic devices 1 to 3 may be identification codes 1, 2, and 3 respectively. For the displays configured in the cockpit, display identification information configured by the electronic device 1 for the central display screen, the instrument screen, the front passenger screen, the rear-row left screen, and the rear-row right screen may be names of the displays, for example, may be respectively "central display screen", "instrument screen", "front passenger screen", "rear-row left screen", and "rear-row right screen". In this case, a display mark of the central display screen may be a 1-central display screen, a display mark of the instrument screen may be a 1-instrument screen, a display mark of the front passenger screen is a 1-front passenger screen, a display mark of the rear-row left screen is 2-rear-row left screen, and a display mark of the rear-row right screen is a 2-rear-row right screen. Optionally, the electronic device 1 may also allocate, based on types and numbers of the main screen and the secondary screens, display marks to the displays configured in the cockpit. For example, the display marks configured by the electronic device 1 for the central display screen, the instrument screen, the front passenger screen, the rear-row left screen, and the rear-row right screen may be respectively a 1-main screen, a 1-secondary screen 1, a 1-secondary screen 2, a 2-main screen, and a 2-secondary screen. For a display of the electronic device 3, if the electronic device 3 has only one display, device identification information of the electronic device 3 may be directly used as a display mark of the display, or if the electronic device 3 has a plurality of displays, the plurality of displays may be numbered and then used as display identification information, to obtain display marks of the displays. For example, when the electronic device 3 has two displays, display marks of the two displays may be respectively a 3-display 1 and a 3-display 2.

It should be noted that the scenario shown in FIG. 3a is merely an example, and does not limit the scenario to which the method provided in embodiments of this application is applicable. During actual application, division into devices to which the displays in the cockpit belong, a configuration manner of the display mark, and the like may be flexibly set. This is not specifically limited in embodiments of this application.

According to the foregoing mapping relationship between the display indication information and the display identifier, the second electronic device may perform information recording on the plurality of displays existing in space, namely, the cockpit, in which the second electronic device is located, and may invoke the displays when required. The second electronic device may further update the stored mapping relationship based on an increase or decrease situation of the display in the cockpit, to ensure that the stored mapping relationship corresponds to the display that actually exists in the cockpit. For example, after a new electronic device that can be used as a projection device is added to the cockpit, the second electronic device may add and store a mapping relationship between display indication information and a display mark of the display of the electronic device; and when some displays of the electronic device are removed from the cockpit, the second electronic device may delete mapping relationships between display indication information and display marks of these displays.

In embodiments of this application, in an optional implementation, in a projection process, the second electronic device may provide, for the first electronic device that initiates projection, the mapping relationships between the display indication information and the display marks of the plurality of displays, so that the first electronic device may provide the display indication information of the plurality of displays for the user, and the user selects a target display that accepts projection. After the user selects the target display, the first electronic device may return a display mark of the target display to the second electronic device, so that the second electronic device determines the target display for accepting projection. In the method, based on the display mark, the second electronic device may virtualize each display into an independent device and provide the independent device for the first electronic device that initiates projection, to support the user in randomly selecting, from the plurality of displays, the display that accepts projection, and implement effect that the first electronic device performs projection to any display in the plurality of displays.

In another optional implementation, in a projection process, after receiving a projection request from the first electronic device, the second electronic device may directly provide the display indication information of the plurality of displays for the user based on the mapping relationships between the display indication information and the display marks of the plurality of displays, so that the user selects, on a side of the second electronic device, the target display that accepts projection from the first electronic device. When the target display is a display of another electronic device, the second electronic device may determine the corresponding another electronic device based on a corresponding display mark, and indicate the another electronic device to accept projection. This manner may also support the user in randomly selecting, from the plurality of displays, the display that accepts projection, to implement the effect that the first electronic device performs projection to any display in the plurality of displays.

In some embodiments of this application, the second electronic device may include a projection unit, a multi-screen mapping unit, and a display management unit. The projection unit is configured to control a projection process between the second electronic device and the another electronic device. The multi-screen mapping unit is configured to establish and maintain the mapping relationships between the display indication information and the display marks of the plurality of displays, where the plurality of displays are used as projection receive ends. The display management unit is configured to discover and manage all displays that are configured in the cockpit and that may be used as projection receive ends.

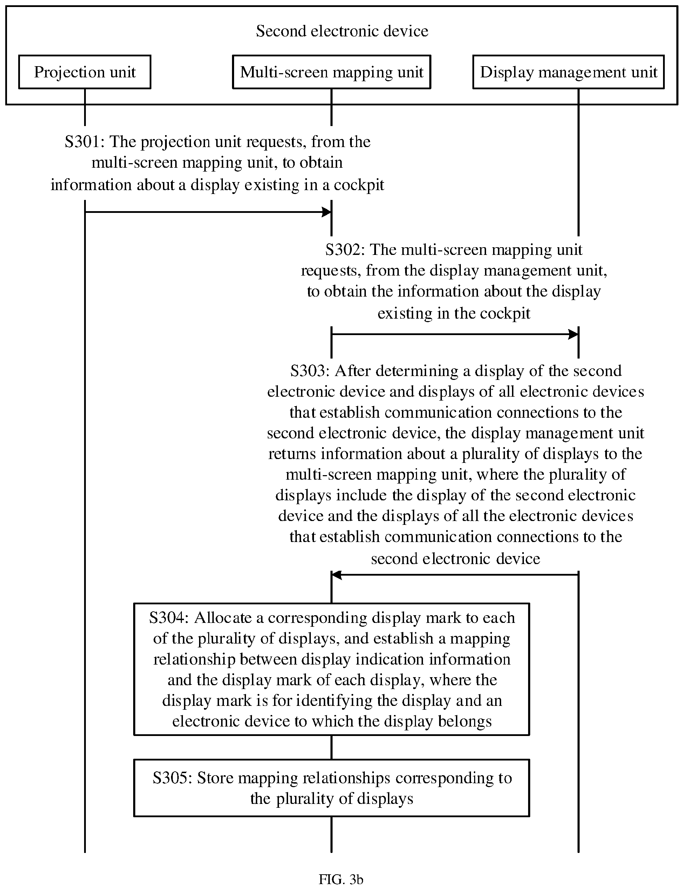

Refer to FIG. 3b. A display discovery and management method according to an embodiment of this application may include the following steps.

S301: The projection unit in the second electronic device requests, from the multi-screen mapping unit, to obtain information about the display existing in the cockpit.

S302: The multi-screen mapping unit requests, from the display management unit, to obtain the information about the display existing in the cockpit.

S303: After determining the display of the second electronic device and displays of all electronic devices that establish communication connections to the second electronic device, the display management unit returns information about the plurality of displays to the multi-screen mapping unit, where the plurality of displays include the display of the second electronic device and the displays of all the electronic devices that establish communication connections to the second electronic device.

S304: The multi-screen mapping unit allocates a corresponding display mark to each of the plurality of displays, and establishes a mapping relationship between display indication information and the display mark of each display, where the display mark is for identifying the display and an electronic device to which the display belongs.

S305: The multi-screen mapping unit stores the mapping relationships corresponding to the plurality of displays.

The projection unit may query the mapping relationship corresponding to the display from the multi-screen mapping unit when the mapping relationship corresponding to the display is required.

For specific implementations of the foregoing steps, refer to related descriptions in the foregoing embodiment. Details are not described herein again.

### Phase 2: Display selection and projection execution

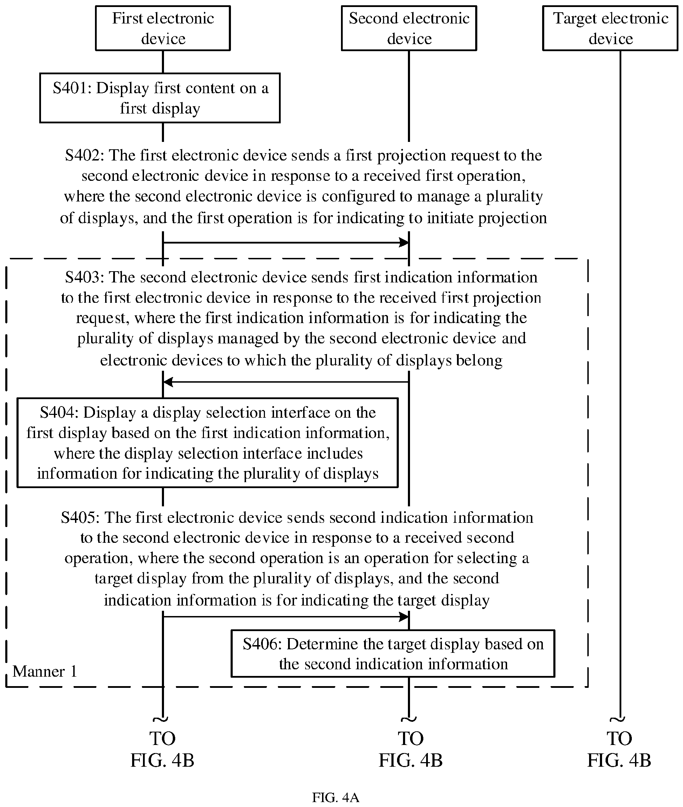

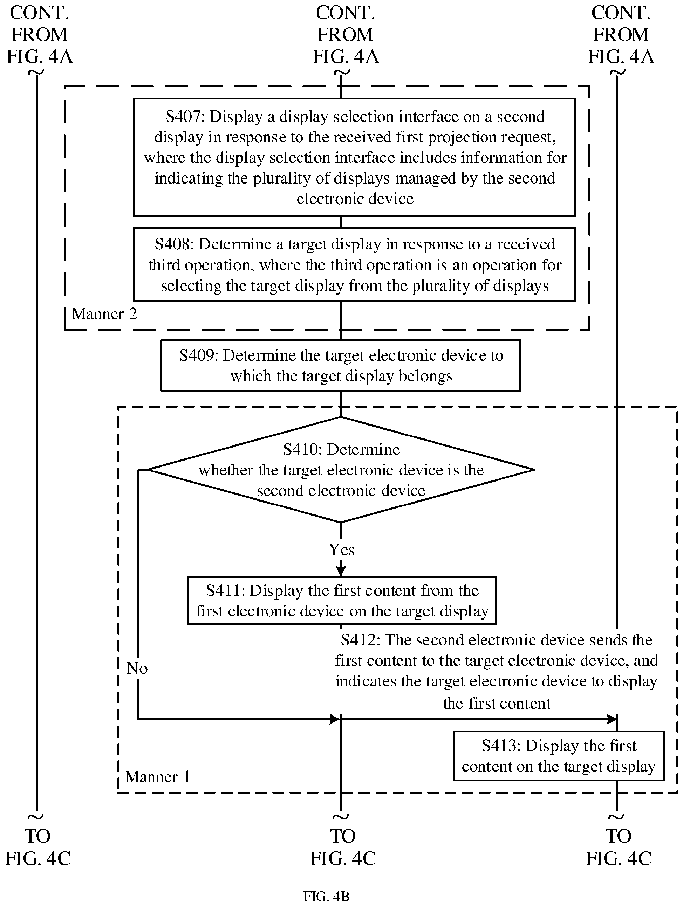

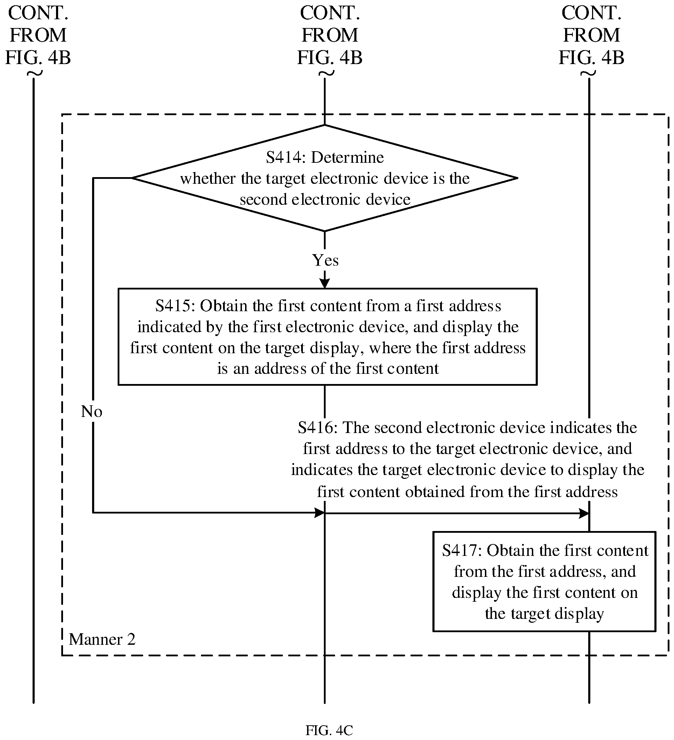

Refer to FIG. 4A to FIG. 4C. A display selection and projection method according to an embodiment of this application may include the following steps.

S401: A first electronic device displays first content on a first display.

In some embodiments of this application, the first content may be content displayed in a system application installed in the first electronic device or a third-party application.

S402: The first electronic device sends a first projection request to a second electronic device in response to a received first operation, where the second electronic device is configured to manage a plurality of displays, and the first operation is for indicating to initiate projection.

The display managed by the second electronic device may be a display that belongs to the second electronic device, or may be a display that belongs to another electronic device. The first projection request is for requesting to perform projection to the display managed by the second electronic device.

In some embodiments of this application, the first electronic device may be a mobile electronic device, and the second electronic device may be a cockpit system, a cockpit central control, an electronic device in a cockpit, or the like. Optionally, the first electronic device is located in the cockpit.

In this embodiment of this application, projection may be implemented between the first electronic device and the second electronic device in a wireless communication manner or a wired communication manner. A projection technology based on the wireless communication manner may include, for example, a digital living network alliance (digital living network alliance, DLNA) projection technology, a wireless projection technology, or the like. A projection technology implemented based on the wired communication manner is a wired projection technology.

When the first electronic device and the second electronic device implement projection in the wireless communication manner, the first electronic device and the second electronic device may access a same local area network based on a same communication protocol and establish a communication connection. When the first electronic device and the second electronic device implement projection in the wired communication manner, the first electronic device and the second electronic device may establish a communication connection after being connected through a same transmission line (for example, a data line).

A specific occasion for establishing the communication connection between the first electronic device and the second electronic device is not limited in this embodiment of this application. For example, the first electronic device and the second electronic device may establish the communication connection before the first electronic device displays the first content; or the first electronic device may establish the communication connection to the second electronic device after displaying the first content and before receiving the first operation; or the first electronic device may establish the communication connection to the second electronic device after receiving the first operation and before sending the first projection request to the second electronic device.

In step S402, in a scenario in which the first electronic device and the second electronic device implement projection in the wireless communication manner, the first electronic device may send the first projection request to the second electronic device through a network. In a scenario in which the first electronic device and the second electronic device implement projection in the wired communication manner, the first electronic device may send the first projection request to the second electronic device through the transmission line between the first electronic device and the second electronic device.

In an optional implementation, when displaying the first content on the first display, the first electronic device may simultaneously display a projection control configured to trigger projection. When receiving an operation performed on the projection control, the first electronic device determines to initiate projection. If the first electronic device determines that the second electronic device can accept projection from the first electronic device, the first electronic device may send the first projection request to the second electronic device, to request projection to the display managed by the second electronic device.

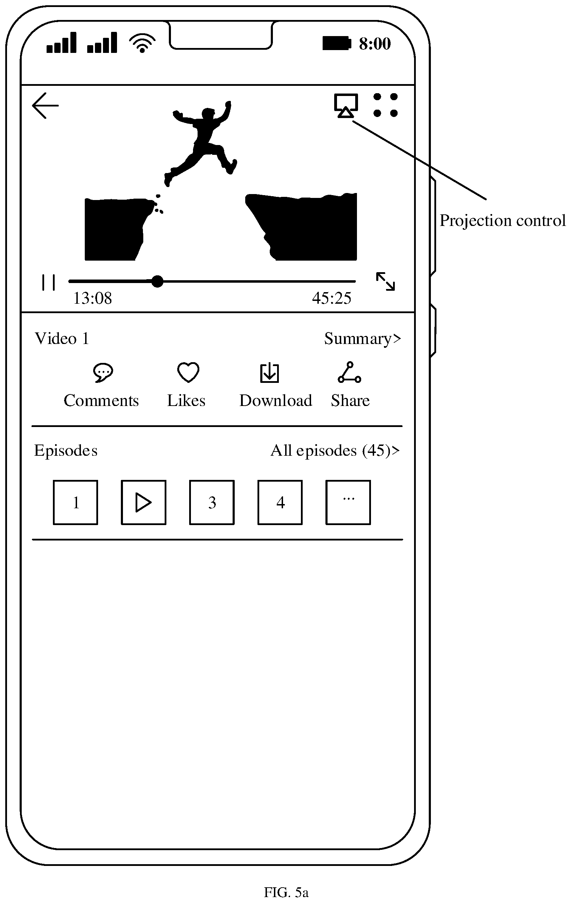

Example 1: That the first electronic device is a mobile phone is used as an example. As shown in FIG. 5a, the first content displayed by the first electronic device may be video content, and a video application interface displayed by the first electronic device may include the projection control configured to trigger projection. When a user taps the projection control, the first electronic device may initiate projection of the video content.

In another optional implementation, after displaying the first content on the first display, the first electronic device may display, in response to the received operation for triggering displaying of the projection control, an interface including the projection control; and when receiving the operation performed on the projection control, the first electronic device determines to initiate projection. If the first electronic device determines that the second electronic device can accept projection from the first electronic device, the first electronic device may send the first projection request to the second electronic device, to request projection to the display managed by the second electronic device.

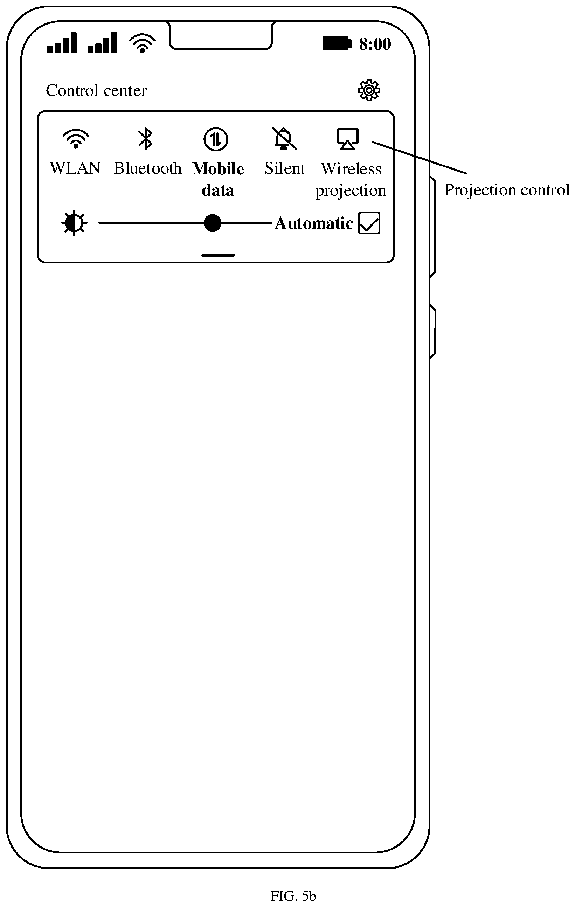

Example 2: Based on the scenario shown in Example 1, the user may also trigger, by performing the operation on the display, the first electronic device to display a drop-down control interface shown in FIG. 5b, and the interface includes the projection control configured to initiate wireless projection. When the user taps the control, the first electronic device may initiate projection of content in a previous interface (namely, the video application interface).

In some embodiments of this application, after the first electronic device sends the first projection request to the second electronic device, the user further needs to select, from the plurality of displays managed by the second electronic device, a target display that accepts projection from the first electronic device. When the first electronic device and the second electronic device provide the plurality of displays managed by the second electronic device for the user, so that the user selects, from the plurality of displays, the target display that accepts projection from the first electronic device, any one of the following manners may be used for the implementation:
Manner 1: The first electronic device and the second electronic device cooperate to provide experience of selecting the target display on a side of the first electronic device.
   In this manner, the first electronic device may obtain, from the second electronic device, the plurality of displays managed by the second electronic device, and provide the plurality of displays for the user. After the user selects, from the plurality of displays, the target display that accepts projection from the first electronic device, the first electronic device indicates the target display to the second electronic device. In this manner, the user may perform projection-related control only on the side of the first electronic device, and convenience is high.
Manner 2: The second electronic device provides experience of selecting the target display on a side of the second electronic device.

In this manner, the second electronic device may directly provide the plurality of managed displays for the user, and determine the target display that is selected by the user from the plurality of displays and that accepts projection from the first electronic device. In this manner, the user may initiate projection on the side of the first electronic device, and select, on the side of the second electronic device, the display that accepts projection, so that a quantity of times of interaction between the first electronic device and the second electronic device can be reduced, and processing efficiency of the first electronic device and the second electronic device can be improved.

The following describes the foregoing two manners in detail.

In this embodiment of this application, in an optional implementation, in a case in which the target display is selected in Manner 1 above, after step S402, the first electronic device and the second electronic device may perform steps S403 to S406 below.

S403: The second electronic device sends first indication information to the first electronic device in response to the received first projection request, where the first indication information is for indicating the plurality of displays managed by the second electronic device and electronic devices to which the plurality of displays belong.

In a possible case, the plurality of displays include a plurality of displays of the second electronic device. In another possible case, the plurality of displays include at least one display of the second electronic device and a display of another electronic device in space in which the second electronic device is located.

In some embodiments of this application, the first indication information may include a mapping relationship between a display mark and display indication information that correspond to each of the plurality of displays. For the display mark and the display indication information, refer to the descriptions in the foregoing embodiment. Details are not described herein again.

In this embodiment of this application, when the first electronic device and the second electronic device implement projection in a wireless communication manner, a protocol field included in a communication protocol used by the first electronic device and the second electronic device may be extended to carry display-related indication information (for example, the first indication information and second indication information described below) transmitted between the first electronic device and the second electronic device. Specifically, a virtual device field may be added to the communication protocol used by the first electronic device and the second electronic device, and the virtual device field is bound to the display information, so that the first electronic device and the second electronic device can identify each display. The second electronic device may transmit, to the first electronic device by using the virtual device field, the mapping relationships between the display marks and the display indication information that correspond to the plurality of displays managed by the second electronic device, so that the first electronic device may learn of the plurality of displays managed by the second electronic device, and may notify the user of the plurality of displays managed by the second electronic device. The first electronic device may also transmit, to the second electronic device by using the virtual device field, a display mark corresponding to a display selected by the user from the plurality of displays managed by the second electronic device, so that the second electronic device learns of the display selected by the user.

A display of an electronic device may be uniquely identified based on a display mark. Therefore, different displays of a same device can be separately virtualized into virtual devices, to distinguish between different displays of a same electronic device. The display mark or the mapping relationship between the display mark and the display indication information is transmitted in the extended virtual device field in the communication protocol, a virtual device can correspond to the plurality of displays, and the virtual device field can correspond to the plurality of displays, to support another electronic device in identifying and distinguishing between the displays based on information in the virtual device field.

For example, in a scenario in which the first electronic device and the second electronic device implement projection by using a DLNA projection technology, the first electronic device and the second electronic device may extend a universal plug and play (universal plug and play, UPnP for short) protocol field, and transmit display-related information between the first electronic device and the second electronic device by adding the virtual device field to a UPnP protocol. The UPnP protocol is a DLNA underlying protocol, and may be used to discover a device, transmit a message, and the like in a DLNA projection process. For example, the second electronic device may transmit the first indication information to the first electronic device by using the extended virtual device field in the UPnP protocol.

For example, in a scenario in which the first electronic device and the second electronic device implement projection by using a wireless projection technology, a protocol used when the first electronic device and the second electronic device communicate with each other may be a miracast protocol, a cast+ protocol, or the like. The first electronic device and the second electronic device may add the virtual device field to these protocols; and when using these protocols, the first electronic device and the second electronic device may transmit the display-related information based on the virtual device field added to the protocols. For example, the second electronic device may transmit the first indication information to the first electronic device by using the extended virtual device field in the miracast protocol or the cast+ protocol.

In step S403, in a scenario in which the first electronic device and the second electronic device implement projection in the wireless communication manner, the second electronic device may send the first indication information to the first electronic device through a network according to the foregoing method. In a scenario in which the first electronic device and the second electronic device implement projection in the wired communication manner, the second electronic device may send the first indication information to the first electronic device through the transmission line between the second electronic device and the first electronic device.

For example, step S403 may be cooperatively performed by the projection unit and the multi-screen mapping unit in the second electronic device. The projection unit may obtain content of the first indication information from the multi-screen mapping unit, and send the first indication information to the first electronic device.

S404: The first electronic device displays a display selection interface on the first display based on the first indication information, where the display selection interface includes information for indicating the plurality of displays.

In some embodiments of this application, the information for indicating the plurality of displays may include the display indication information of each display. For the display indication information, refer to the descriptions in the foregoing embodiment. Details are not described herein again.

Optionally, the display selection interface may be displayed in a full screen mode, or may be displayed in a windowed mode.

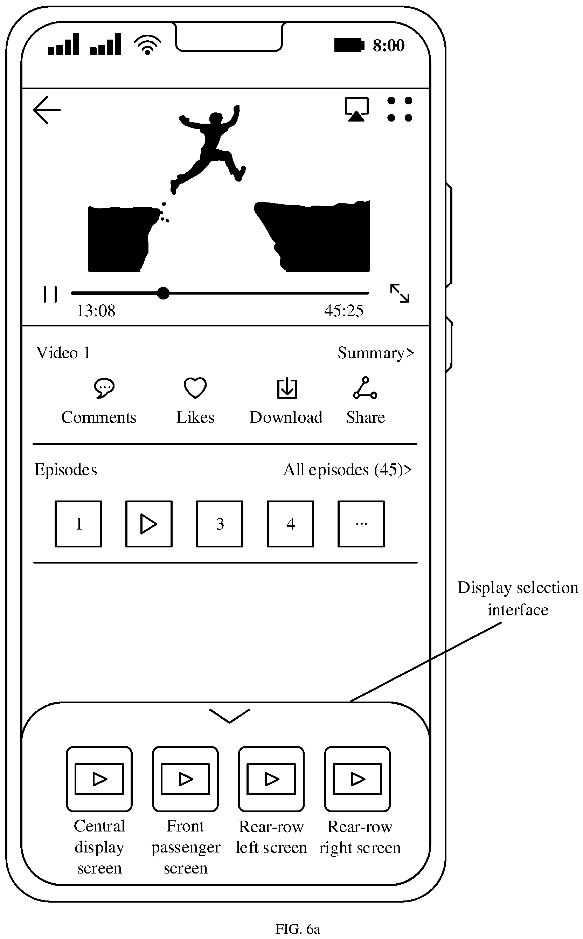

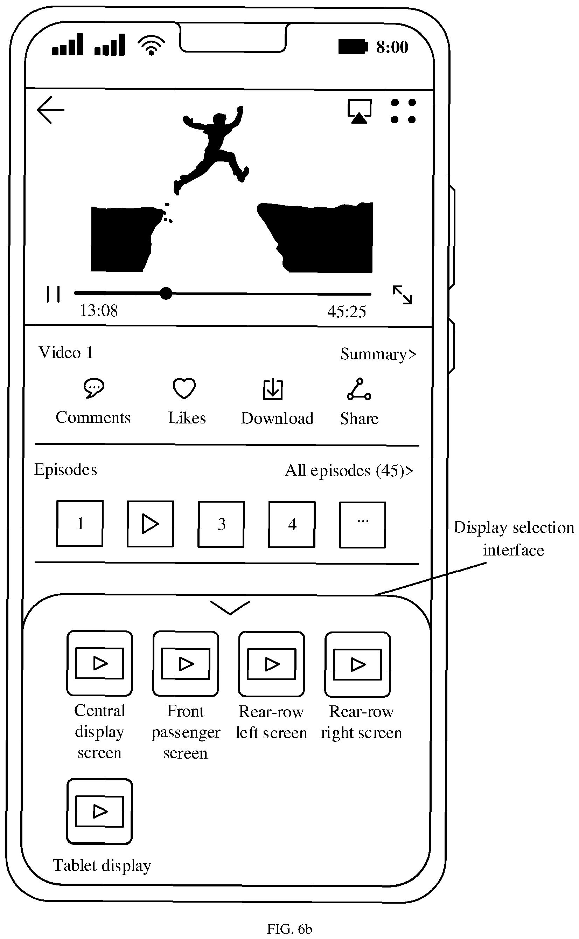

Example 3: That the second electronic device is a vehicle is used as an example. Based on the scenario described in Example 1 or Example 2, if the displays managed by the second electronic device include only the plurality of displays that belong to the second electronic device, for example, a central display screen, a front passenger screen, a rear-row left screen, and a rear-row right screen in the vehicle cockpit, after the first electronic device receives the operation performed by the user on the projection control, the first electronic device may display the display selection interface shown in FIG. 6a, the interface may include information, for example, a display icon and a display name, for indicating the central display screen, the front passenger screen, the rear-row left screen, and the rear-row right screen. If the displays managed by the second electronic device include the foregoing plurality of displays that belong to the second electronic device and a display, for example, a tablet display, that belongs to another electronic device in the vehicle cockpit, after the first electronic device receives the operation performed by the user on the projection control, the first electronic device may display the display selection interface shown in FIG. 6b, and the interface may include information for indicating the central display screen, the front passenger screen, the rear-row left screen, the rear-row right screen, and the tablet display.

In some embodiments of this application, before displaying the display selection interface, the first electronic device may first display a device selection interface, the device selection interface includes at least one electronic device connected to the first electronic device, and the at least one electronic device includes the second electronic device. After receiving an operation for selecting the second electronic device from the at least one electronic device, the first electronic device displays the display selection interface.

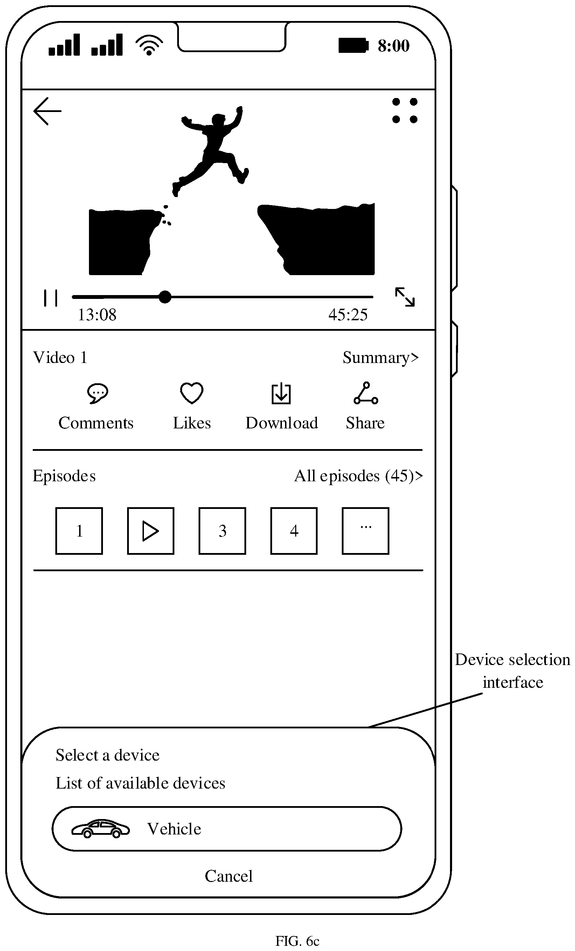

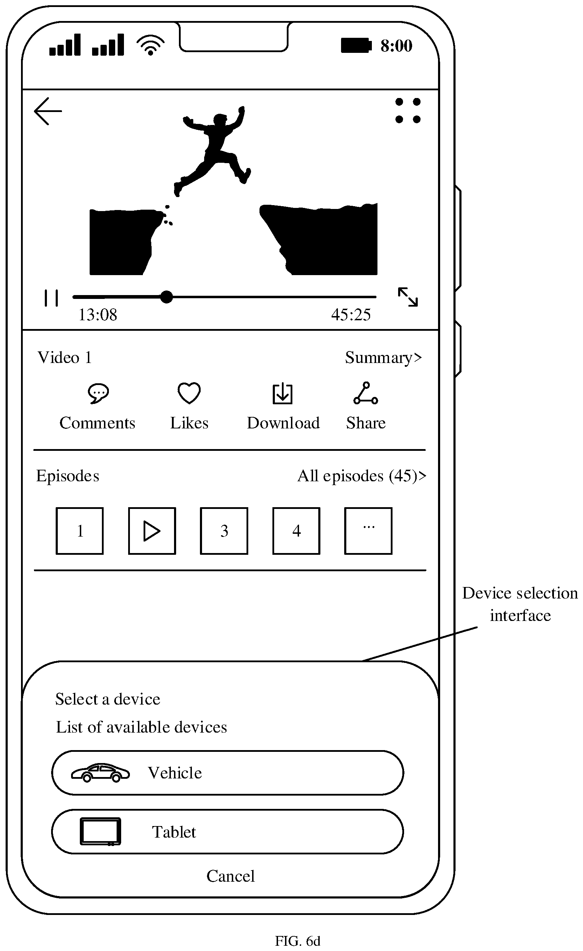

Example 4: Based on the scenario described in Example 3, before displaying the display selection interface shown in FIG. 6a, the first electronic device may further display a device selection interface shown in FIG. 6c, and the interface includes information for indicating a cockpit central control device. The first electronic device may display the display selection interface shown in FIG. 6a after receiving a vehicle selection operation performed on the interface. When the displays managed by the second electronic device further include a display, for example, a tablet display, of another electronic device in the vehicle cockpit, before displaying the display selection interface shown in FIG. 6a, the first electronic device may further display the device selection interface shown in FIG. 6d, and the interface includes information for indicating a vehicle and a tablet. The first electronic device may display the display selection interface shown in FIG. 6a after receiving the vehicle selection operation performed on the interface.

S405: The first electronic device sends second indication information to the second electronic device in response to a received second operation, where the second operation is an operation for selecting a target display from the plurality of displays, and the second indication information is for indicating the target display.

The second indication information may be display indication information of the target display. For the display indication information, refer to the descriptions in the foregoing embodiment. Details are not described herein again.

Optionally, the second indication information may be further for indicating an electronic device to which the target display belongs. In this way, the second indication information may be a display mark of the target display. For the display mark, refer to the descriptions in the foregoing embodiment. Details are not described herein again.

For example, in a scenario in which the first electronic device and the second electronic device implement projection by using the DLNA projection technology, the first electronic device may transmit the second indication information to the second electronic device by using the extended virtual device field in the UPnP protocol. In a scenario in which the first electronic device and the second electronic device implement projection by using the wireless projection technology, the first electronic device may transmit the second indication information to the second electronic device by using an extended virtual device field in a wireless communication protocol.

In step S405, in a scenario in which the first electronic device and the second electronic device implement projection in the wireless communication manner, the first electronic device may send the second indication information to the second electronic device through a network. In a scenario in which the first electronic device and the second electronic device implement projection in the wired communication manner, the first electronic device may send the second indication information to the second electronic device through the transmission line between the first electronic device and the second electronic device.

S406: The second electronic device determines the target display based on the second indication information, and performs step S409.

The second electronic device may determine that the display indicated by the display indication information in the second indication information is the target display.

For example, step S406 may be performed by the projection unit in the second electronic device.

In this embodiment of this application, in another optional implementation, in a case in which the target display is selected in Manner 2 above, after step S402, the second electronic device may perform steps S407 and S408 below.

S407: The second electronic device displays a display selection interface on a second display in response to the received first projection request, where the display selection interface includes information for indicating the plurality of displays managed by the second electronic device.

The second display may be any display of the second electronic device.

In some embodiments of this application, the information for indicating the plurality of displays may include the display indication information of each display. For the display indication information, refer to the descriptions in the foregoing embodiment. Details are not described herein again.

Optionally, the display selection interface may be displayed in a full screen mode, or may be displayed in a windowed mode.

For a manner of displaying the display selection interface by the second electronic device, refer to the manner of displaying the display selection interface by the first electronic device in the foregoing embodiment. Details are not described herein again.

For example, step S407 may be cooperatively performed by the projection unit and the multi-screen mapping unit in the second electronic device. The projection unit may obtain the information about the plurality of displays from the multi-screen mapping unit, and display the information to the user.

S408: The second electronic device determines the target display in response to a received third operation, where the third operation is an operation for selecting the target display from the plurality of displays, and performs step S409.

For example, step S408 may be performed by the projection unit in the second electronic device.

S409: The second electronic device determines a target electronic device to which the target display belongs.

In some embodiments of this application, in a case in which the target display is selected in Manner 1 above, the second electronic device may determine, based on the second indication information from the first electronic device, the target display and the target electronic device to which the target display belongs. When the second indication information includes only the display indication information, the second electronic device may determine the corresponding target display based on the display indication information, and may determine, based on the stored mapping relationship between the display indication information and the display mark, the display mark corresponding to the display indication information, to determine, based on the display mark, the target electronic device to which the target display belongs. When the second indication information includes the display mark, the second electronic device may determine, based on the display mark, the corresponding target display and the target electronic device to which the target display belongs.

In some embodiments of this application, in a case in which the target display is selected in Manner 2 above, the second electronic device may determine, based on the operation performed by the user, the display indication information selected by the user, to determine the corresponding target display, and may determine, based on the stored mapping relationship between the display indication information and the display mark, the display mark corresponding to the display indication information selected by the user, to determine, based on the display mark, the target electronic device to which the target display belongs.

For example, step S409 may be performed by the projection unit in the second electronic device.

In some embodiments of this application, after determining the target display according to the foregoing method, the second electronic device may control implementation of projection from the first electronic device to the target display, that is, display the projected content (namely, the first content) of the first electronic device on the target display. A manner in which the second electronic device obtains the projected content of the first electronic device may be any one of the following manners:
Manner 1: Directly receiving the projected content from the first electronic device.
Manner 2: Receiving an address of the indicated projected content of the first electronic device, and obtaining the projected content from the address.

In some embodiments of this application, in an optional implementation, in a case in which a manner in which the second electronic device obtains the projected content is Manner 1 above, that is, the second electronic device directly receives the projected content from the first electronic device, after step S409, the first electronic device and the second electronic device may perform steps S410 to S413 below:
S410: The second electronic device determines whether the target electronic device is the second electronic device. If the target electronic device is the second electronic device, performs step S411; or if the target electronic device is not the second electronic device, performs step S412.
S411: The second electronic device displays the first content from the first electronic device on the target display.

In a scenario in which the first electronic device and the second electronic device implement projection in the wireless communication manner, the first electronic device may send the first content to the second electronic device through a network. In a scenario in which the first electronic device and the second electronic device implement projection in the wired communication manner, the first electronic device may send the first content to the second electronic device through the transmission line between the first electronic device and the second electronic device.

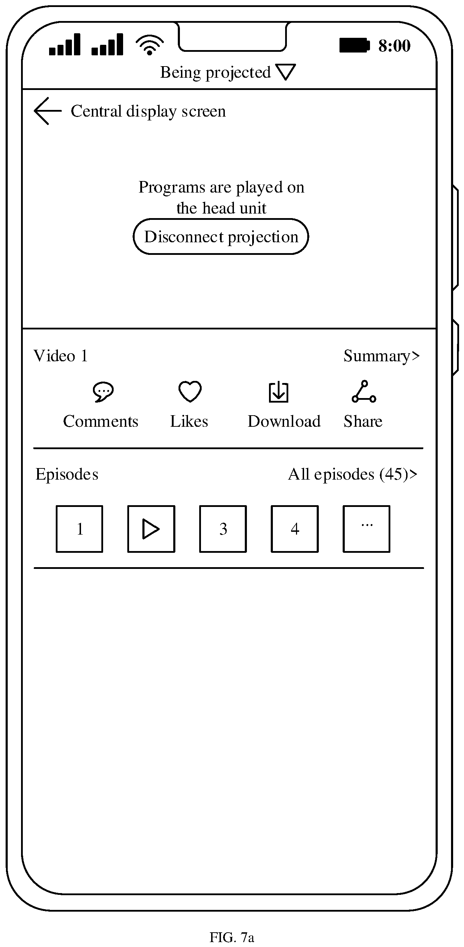

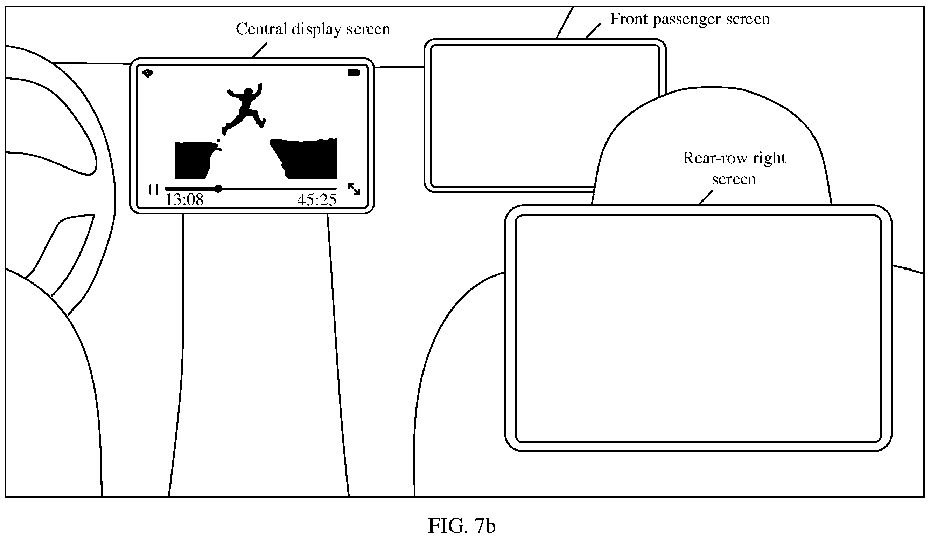

Example 5: Based on the scenario described in Example 3, the first content may be video content, on a video application interface, displayed by the first electronic device. After the user selects the central display screen on the display selection interface shown in FIG. 6a, the first electronic device projects the video content to the central display screen. As shown in FIG. 7a, the first electronic device no longer displays the video content. Optionally, the first electronic device may display information such as prompt information for indicating that projection has been performed, the target display that accepts projection, or the electronic device to which the target display belongs. As shown in FIG. 7b, the vehicle may display the video content on the central display screen.

S412: The second electronic device sends the first content to the target electronic device, and indicates the target electronic device to display the first content.

For example, steps S410 to S412 may be performed by the projection unit in the second electronic device.

S413: The target electronic device displays the first content on the target display.

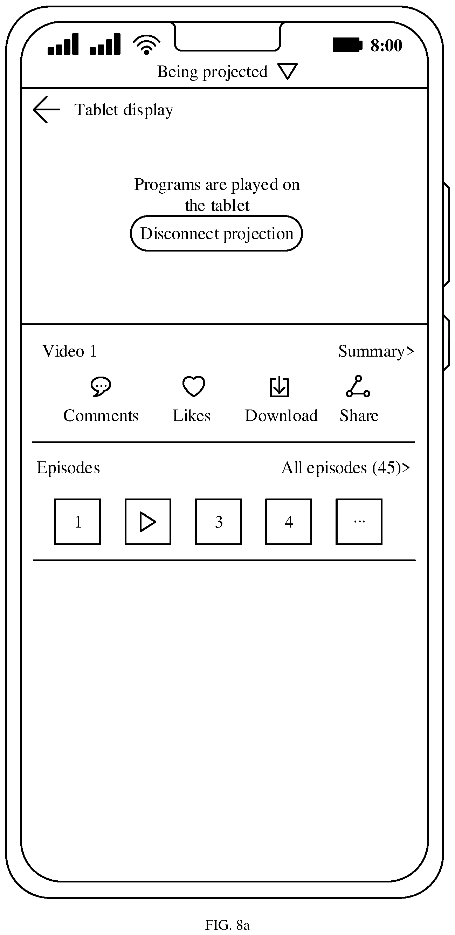

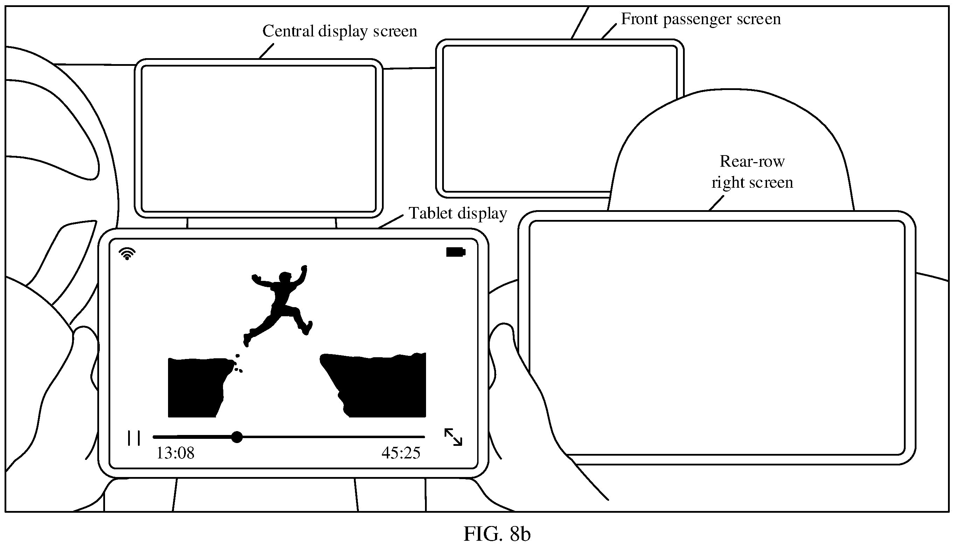

Example 6: Based on the scenario described in Example 3, the first content may be video content, on a video application interface, displayed by the first electronic device. After the user selects the tablet display on the display selection interface shown in FIG. 6b, the first electronic device projects the video content to the tablet display. As shown in FIG. 8a, the first electronic device no longer displays the video content. Optionally, the first electronic device may display prompt information for indicating that projection has been performed, the target display that accepts projection, the electronic device to which the target display belongs, or the like. As shown in FIG. 8b, the video content may be displayed on the tablet display in the vehicle cockpit.

In some embodiments of this application, in another optional implementation, in a case in which a manner in which the second electronic device obtains the projected content is Manner 2 above, that is, the second electronic device obtains the projected content from the address after receiving the address of the indicated projected content of the first electronic device, after step S409, the first electronic device and the second electronic device may perform steps S414 to S417 below:
S414: The second electronic device determines whether the target electronic device is the second electronic device. If the target electronic device is the second electronic device, performs step S415; or if the target electronic device is not the second electronic device, performs step S416.
S415: The second electronic device obtains the first content from a first address indicated by the first electronic device, and displays the first content on the target display, where the first address is an address of the first content.
   The first electronic device may indicate the first address to the second electronic device by using a uniform resource locator (uniform resource locator, URL). In a scenario in which the first electronic device and the second electronic device implement projection in the wireless communication manner, the first electronic device may indicate the first address to the second electronic device through a network. In a scenario in which the first electronic device and the second electronic device implement projection in the wired communication manner, the first electronic device may indicate the first address to the second electronic device through the transmission line between the first electronic device and the second electronic device.
S416: The second electronic device indicates the first address to the target electronic device, and indicates the target electronic device to display the first content obtained from the first address.
   For example, steps S414 to S416 may be performed by the projection unit in the second electronic device.
S417: The target electronic device obtains the first content from the first address, and displays the first content on the target display.

In the projection manner provided in the foregoing embodiment, the target display that accepts projection is selected by the user. In some embodiments of this application, the target display that accepts projection may alternatively be automatically selected by the first electronic device or the second electronic device. The method for determining the target display (steps S403 to S406 or steps S407 and S408) in the method shown in FIG. 4A to FIG. 4C may be replaced with any one of the following methods for automatically selecting the target display.
(1) After the user triggers projection on the first electronic device, or after the user triggers projection on the first electronic device and selects the second electronic device from a list of devices that is provided by the first electronic device, the first electronic device may send the projection request to the second electronic device. In response to the projection request, the second electronic device may use a specified default display (for example, the central display screen) as the target display that accepts projection, or if a location (for example, a seat location such as a driver seat or a front passenger seat) of the user corresponding to the first electronic device can be identified, may use a display corresponding to the location as the target display that accepts projection. In this process, the user does not need to manually select the display that accepts projection.

Example 7: Based on the scenario described in Example 1, when the user corresponding to the first electronic device is a user at a driver seat in the vehicle cockpit, after the user at the driver seat taps the video control shown in FIG. 5a, the first electronic device may switch from displaying the interface shown in FIG. 5a to displaying the interface shown in FIG. 7a. On the interface shown in FIG. 7a, the first electronic device no longer displays the video content, and may display the prompt information during projection. Optionally, the first electronic device may also display the target display that accepts projection, the electronic device to which the target display belongs, or the like. After the user at the driver seat taps the video control shown in FIG. 5a, as shown in FIG. 7b, the second electronic device, namely, the vehicle, may display the video content on the display, namely, the central display screen, corresponding to a seat of the user at the driver seat. Therefore, after triggering projection, the user at the driver seat can perform projection to the display corresponding to the seat of the user at the driver seat without performing any operation.

Example 8: Based on the scenario described in Example 4, when the user corresponding to the first electronic device is a user at a driver seat in the vehicle cockpit, after the user at the driver seat selects the vehicle on the device selection interface shown in FIG. 6d, the first electronic device may switch from displaying the interface shown in FIG. 6d to displaying the interface shown in FIG. 7a. After the user at the driver seat selects the vehicle on the device selection interface shown in FIG. 6d, as shown in FIG. 7b, the second electronic device, namely, the vehicle, may display the video content on the display, namely, the central display screen, corresponding to a seat of the user at the driver seat.

(2) After the first electronic device establishes a communication connection to the second electronic device, or when the first electronic device cooperates with the second electronic device, the user may select a location on the first electronic device, and the first electronic device may determine, based on the location selected by the user, the display corresponding to the user. For example, locations of the user may be distinguished between by using seats in the cockpit. In this case, the first electronic device may provide a plurality of seats (for example, a driver seat, a front passenger seat, a rear-row left seat, and a rear-row right seat) in the cockpit for the user, the user may select the seat from the plurality of seats, and the first electronic device may determine, based on the seat selected by the user, the display corresponding to the user. For example, when a user at the front passenger seat selects the front passenger seat as the seat, the first electronic device may determine that the display corresponding to the user is the front passenger screen. In this case, after the user triggers projection on the first electronic device, or after the user triggers projection on the first electronic device and selects the second electronic device from a list of devices that is provided by the first electronic device, the first electronic device and the second electronic device may use the display corresponding to the user (namely, the display corresponding to the location selected by the user) as the target display that accepts projection. In this process, the user does not need to manually select the display that accepts projection. The first electronic device may indicate, to the second electronic device in the projection process, the display corresponding to the location selected in advance by the user as the target display, or the first electronic device may indicate, to the second electronic device, the location selected in advance by the user, and the second electronic device may determine the corresponding target display based on the location.

In some embodiments of this application, after the first electronic device performs projection to the target display, the user may control, on the first electronic device or the second electronic device, to switch the display that accepts projection.

In an optional implementation, after projection, the first electronic device may display a switching control for triggering projection switching. Optionally, the switching control may be a control that is displayed by the first electronic device after projection and that is for indicating a projection status, the target display that accepts projection, or the target electronic device that accepts projection, where the projection status is being projected. When the first electronic device receives an operation performed on the switching control, the first electronic device may display, to the user, information such as the device (namely, the second electronic device) that currently accepts projection, the target display that currently accepts projection, and the plurality of displays managed by the device. The user may switch, by performing the corresponding operation, the target display that accepts projection, and the first electronic device may indicate, to the second electronic device, the switched target display that is indicated by the user. In this case, the second electronic device may switch to display the projected content from the first electronic device on the switched target display.

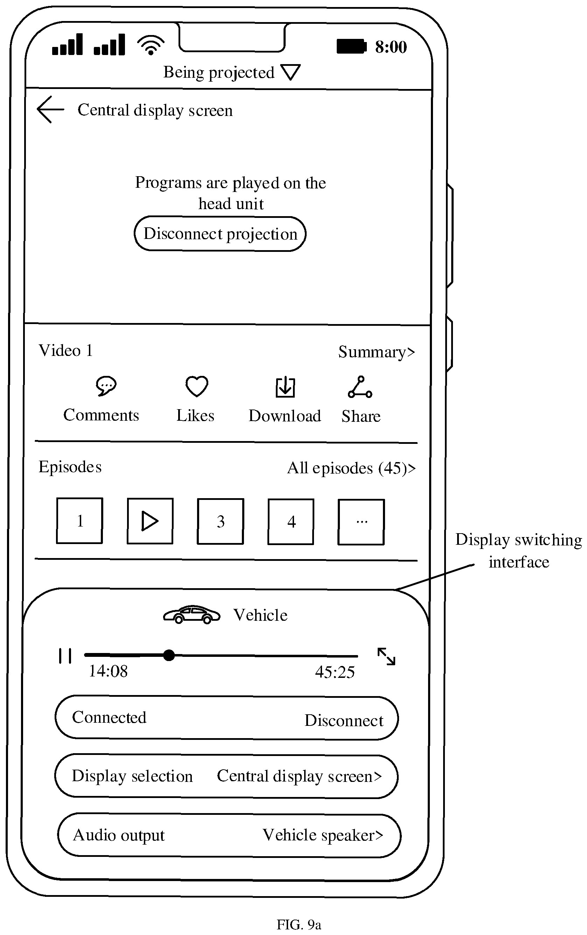

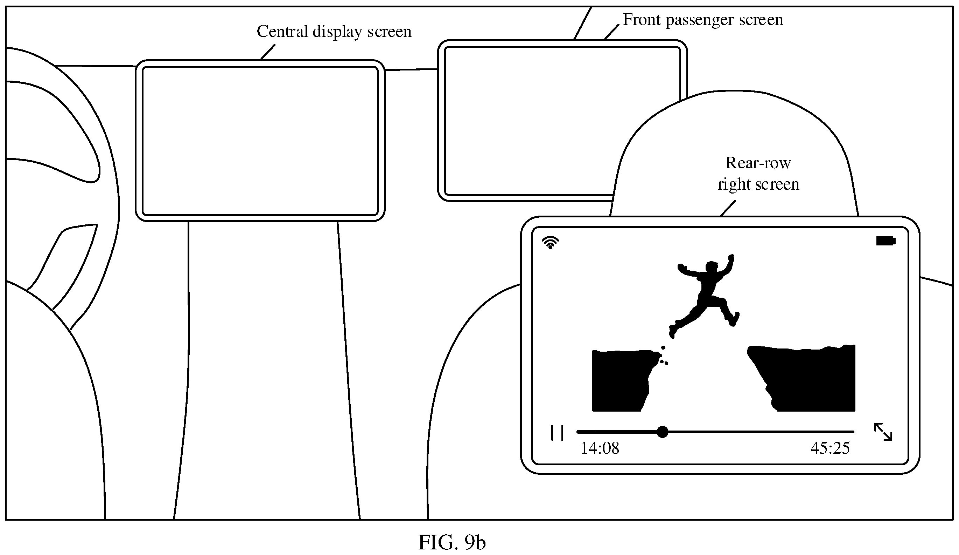

Example 9: Based on the scenario described in Example 7 or Example 8, the switching control may be the control corresponding to the prompt information during projection shown in FIG. 7a. When the first electronic device receives the operation performed by the user on the control, the first electronic device may display the display switching interface shown in FIG. 9a. The interface includes information such as the device that currently accepts projection and the target display that currently accepts projection, and may further include other control information. This is not specifically limited in this embodiment of this application. The user may switch the target display by tapping the control for indicating the target display that currently accepts projection. For example, when the user chooses to switch the projection to the rear-row right screen, as shown in FIG. 9b, the central display screen may stop displaying the video content, and the rear-row right screen may start to display the video content.

In another optional implementation, after the first electronic device performs projection to the target display, the user may choose to switch projection to another display on the target display. For example, the user may control, by performing a setting operation on the target display, the projected content on the target display to be transferred to another display, to implement effect of switching the display that accepts the projection. For another example, the target display may display the control for controlling to switch the display. When the operation performed by the user on the control is received, a list of other displays may be displayed on the target display, and the user may select, from the list, the switched display that accepts projection, so that the projected content is transferred from the target display to the display selected by the user, to implement effect of switching the display that accepts projection.

In another optional implementation, after the first electronic device performs projection to the target display, the user may further transfer the projected content to another display by using a gesture operation on the target display. For example, when the target display is the rear-row left screen, the projected content of the rear-row left screen may be transferred to the rear-row right screen by using a three-finger right sliding operation of the user.

According to the method provided in the foregoing embodiment, projection from the first electronic device to any display associated with the second electronic device can be implemented between the first electronic device and the second electronic device in the wireless communication manner. In terms of the projection manner, a manner such as DLNA projection or wireless projection may be used between the first electronic device and the second electronic device. In terms of the target display selection manner, the first electronic device and the second electronic device may support selection on any device side. In terms of the data transmission manner, the manner may be the manner in which the projected content is directly transmitted to the projection receive end, or may be the manner in which the address of the projected content is transmitted to the projection receive end, so that the projection receive end obtains the projected content based on the address. In terms of the projection effect, the first electronic device may perform projection to any display of the second electronic device, or may perform projection to any display of another electronic device connected to the second electronic device, or may control, on any electronic device after projection, to switch the display that accepts projection. Therefore, the method for implementing projection provided in the foregoing embodiment is quite flexible, and projection can be performed by using a display as a granularity rather than a device as a granularity. Therefore, the display that accepts projection can be flexibly selected, and practicability is higher. In addition, in the foregoing method, resource occupation of the first electronic device is basically not affected in the projection process.

According to the method provided in the foregoing embodiment, content of different applications in a same electronic device can be separately projected to different displays managed by another electronic device, and content in different electronic devices can also be separately projected to different displays managed by the another electronic device. Therefore, in the solution provided in this embodiment of this application, in a multi-screen multi-device environment, a single device or a plurality of devices can simultaneously perform projection a plurality of displays, and practicability is high.

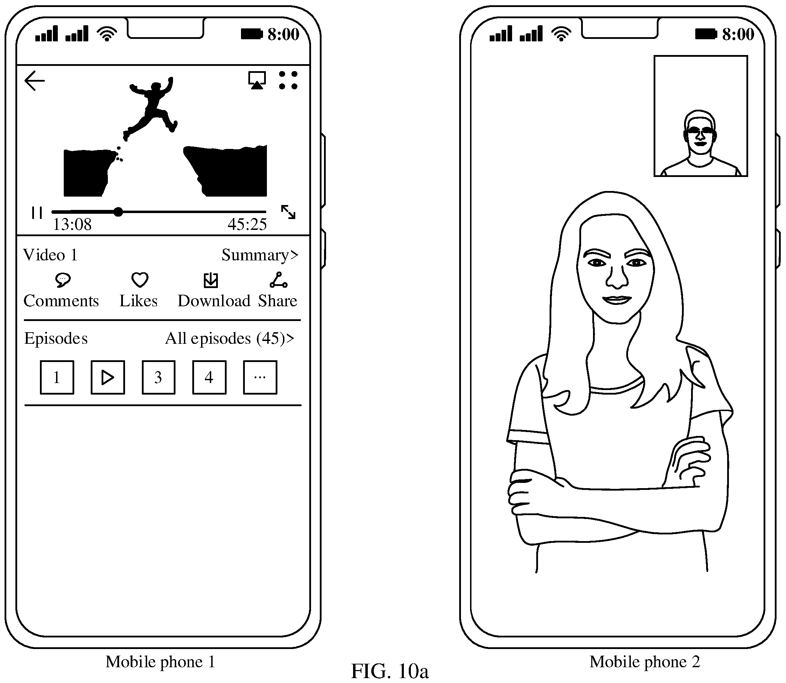

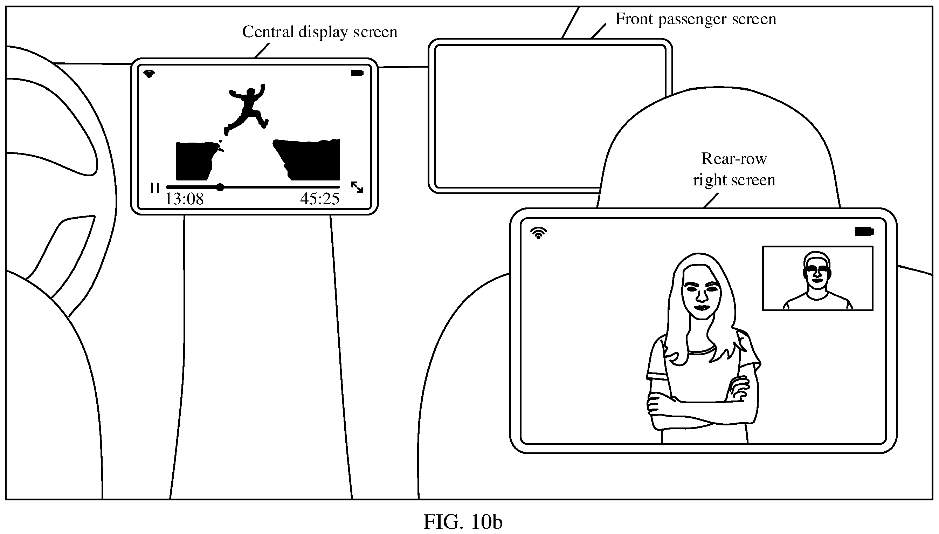

For example, as shown in FIG. 10a, a video interface is displayed in a mobile phone 1, and a call interface is displayed in a mobile phone 2. When a vehicle cockpit includes a central display screen, a front passenger screen, a rear-row left screen, and a rear-row right screen, the mobile phone 1 and a vehicle may project, according to the method for projecting the first electronic device to the display managed by the second electronic device in the foregoing embodiment, video content on the video interface to the central display screen for display, and the mobile phone 2 and the vehicle may project, according to the method for projecting the first electronic device to the display managed by the second electronic device in the foregoing embodiment, the call interface to the rear-row right screen for display. The mobile phone 1 and the mobile phone 2 may simultaneously perform projection and do not interfere with each other. As shown in FIG. 10b, video content may be displayed on a central display screen in a vehicle cockpit, and a call interface may be displayed on a rear-row right screen.

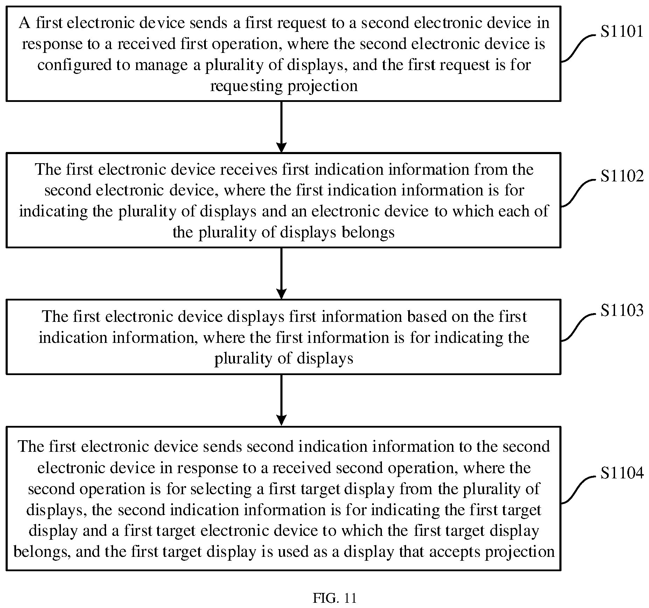

According to the foregoing embodiment and same technical concepts, an embodiment of this application further provides a display selection method. As shown in FIG. 11, the method may include the following steps.

S1101: A first electronic device sends a first request to a second electronic device in response to a received first operation, where the second electronic device is configured to manage a plurality of displays, and the first request is for requesting projection.

In some embodiments of this application, the first electronic device may be configured to use an electronic device that initiates projection, the first electronic device may project content displayed on the display of the first electronic device to any display of the plurality of displays, and the second electronic device may be configured to manage the plurality of displays. In some embodiments of this application, the first electronic device may be a mobile electronic device, and the second electronic device may be an electronic device in a vehicle cockpit.

In some embodiments of this application, the plurality of displays may belong to the second electronic device; or the plurality of displays include at least one display of the second electronic device, and a display of at least one other electronic device that establishes a communication connection to the second electronic device.

For example, the first electronic device may be the first electronic device in the foregoing embodiment, the second electronic device may be the second electronic device in the foregoing embodiment, the another electronic device may be any mobile electronic device, existing in the cockpit, that may be used as a projection receive end in the foregoing embodiment, and so on.

In some embodiments of this application, before sending the first request to the second electronic device in response to the received first operation, the first electronic device may display first content on a first display. In this case, the first content may be used as projected content. For example, the first content may be the first content in the foregoing embodiment, for example, may be the video content shown in FIG. 5a.

In some embodiments of this application, the first operation may be for triggering projection. For example, the first operation may be the operation for triggering displaying of the projection control in the foregoing embodiment.

For example, the first request may be the first projection request in the foregoing embodiment.

S 1102: The first electronic device receives first indication information from the second electronic device, where the first indication information is for indicating the plurality of displays and an electronic device to which each of the plurality of displays belongs.

In some embodiments of this application, the first indication information includes a correspondence between display indication information and display identification information of each of the plurality of displays, display indication information of any display is for indicating the display, and display identification information of any display is for indicating the display and an electronic device to which the display belongs.

For example, the display indication information may be the display indication information in the foregoing embodiment, the display identification information may be the display mark in the foregoing embodiment, and the first indication information may be the first indication information in the foregoing embodiment.

In some embodiments of this application, the first electronic device and the second electronic device may communicate with each other in a wired communication manner or a wireless communication manner.

In an optional implementation, the first electronic device may first establish a wireless communication connection to the second electronic device based on a first communication protocol, where the first communication protocol may be a digital living network alliance DLNA projection protocol or a wireless projection protocol. In this case, the first electronic device may receive a first message sent by the second electronic device according to the first communication protocol, where the first message includes a first target field for carrying the first indication information; and the first electronic device may determine the first indication information based on the first target field in the first message. For details about the process, specifically refer to related descriptions in the foregoing embodiment. Details are not described herein again.

For example, the first target field may be the virtual device field in the foregoing embodiment.

In another optional implementation, the first electronic device may first establish a wired communication connection to the second electronic device based on a first transmission line. In this case, the first electronic device may receive the first indication information sent by the second electronic device through the first transmission line. For details about the process, specifically refer to related descriptions in the foregoing embodiment. Details are not described herein again.

S1103: The first electronic device displays first information based on the first indication information, where the first information is for indicating the plurality of displays.

In some embodiments of this application, the first electronic device may determine, based on the first indication information, the plurality of displays managed by the second electronic device, and may provide the plurality of displays for a user, so that the user selects an electronic device that accepts projection from the plurality of displays.

For example, the first electronic device may indicate the plurality of displays to the user through the display selection interface in the foregoing embodiment. The first information may be information, on the display selection interface in the foregoing embodiment, that is for indicating the plurality of displays, for example, a display icon or a display name.

S1104: The first electronic device sends second indication information to the second electronic device in response to a received second operation, where the second operation is for selecting a first target display from the plurality of displays, the second indication information is for indicating the first target display and a first target electronic device to which the first target display belongs, and the first target display is used as a display that accepts projection.

For example, the second operation may be the second operation in the foregoing embodiment.

In some embodiments of this application, the second indication information includes display identification information of the first target display. For example, the second indication information may be the second indication information in the foregoing embodiment.

In some embodiments of this application, the first target electronic device may be an electronic device located in the vehicle cockpit, for example, may be the display that belongs to the second electronic device, or may be a display that is managed by the second electronic device and that belongs to another electronic device in the vehicle cockpit.

In some embodiments of this application, in a case in which the first electronic device establishes the wireless communication connection to the second electronic device based on the first communication protocol, the first electronic device may send the second indication information to the second electronic device according to the first communication protocol. Specifically, the first electronic device may send a second message to the second electronic device according to the first communication protocol, where the second message includes a second target field for carrying the second indication information. For example, the second target field may be the virtual device field in the foregoing embodiment.

In some embodiments of this application, in a case in which the first electronic device establishes the wired communication connection to the second electronic device based on the first transmission line, the first electronic device may send the second indication information to the second electronic device through the first transmission line.

In some embodiments of this application, after sending the second indication information to the second electronic device, the first electronic device may stop displaying the first content on the first display, and may send, to the second electronic device, the first content or first address information for indicating to obtain an address of the first content, where the address of the first content is used by the first target electronic device to obtain the first content and display the first content on the first target display.

For example, the first address information may be the URL in the foregoing embodiment.

In some embodiments of this application, after indicating projected content to the second electronic device, the first electronic device may change the display that accepts projection. The first electronic device may display second information on the first display in response to a received third operation, where the second information is for indicating at least one display, and the at least one display includes a display in the plurality of displays except the first target display. After displaying the second information, the first electronic device may send third indication information to the second electronic device in response to a received fourth operation, where the fourth operation is for selecting a second target display from the at least one display, the third indication information is for indicating to switch to display the first content on the second target display, and the third indication information is further for indicating the second target display and a second target electronic device to which the second target display belongs.

For example, the third operation may be the operation performed on the switching control in the foregoing embodiment. The second information may be information, on the display switching interface in the foregoing embodiment, that is for indicating the display, for example, the information shown in FIG. 9a. The fourth operation may be the operation for selecting the switched display that accepts projection in the foregoing embodiment. The third indication information may include display identification information of the second target display, for example, a display mark of the second target display.

In some embodiments of this application, in a case in which the first electronic device projects the first content to the first target display, the first electronic device may further simultaneously project the first content to another display. Specifically, the first electronic device may display the first information in response to a received fifth operation; and send the third indication information to the second electronic device in response to a received sixth operation, where the sixth operation is for selecting a third target display from the plurality of displays, the third indication information is for indicating the third target display and a third target electronic device to which the third target display belongs, and the third target display is used as a display that accepts projection. For specific execution of the process, refer to the process in which the user selects the first target display. Details are not described herein again.

In some embodiments of this application, in a case in which the first electronic device projects the first content to the first target display, the first electronic device may further simultaneously project the first content to a display managed by another electronic device. Specifically, the first electronic device may send a second request to a third electronic device in response to a received seventh operation, where the third electronic device is configured to manage a plurality of displays, and the second request is for requesting projection; receive fourth indication information from the third electronic device, where the fourth indication information is for indicating the plurality of displays managed by the third electronic device and an electronic device to which each display belongs; display third information based on the fourth indication information, where the third information is for indicating the plurality of displays managed by the third electronic device; and send fifth indication information to the third electronic device in response to a received eighth operation, where the eighth operation is for selecting a fourth target display from the plurality of displays managed by the third electronic device, the fifth indication information is for indicating the fourth target display and a fourth target electronic device to which the fourth target display belongs, and the fourth target display is used as a display that accepts projection. For specific execution of the process, refer to the process in which the first electronic device performs projection to the first target display managed by the second electronic device. Details are not described herein again.

In the foregoing method, for specific steps performed by the first electronic device, refer to related descriptions in the foregoing embodiment. Details are not described herein again.

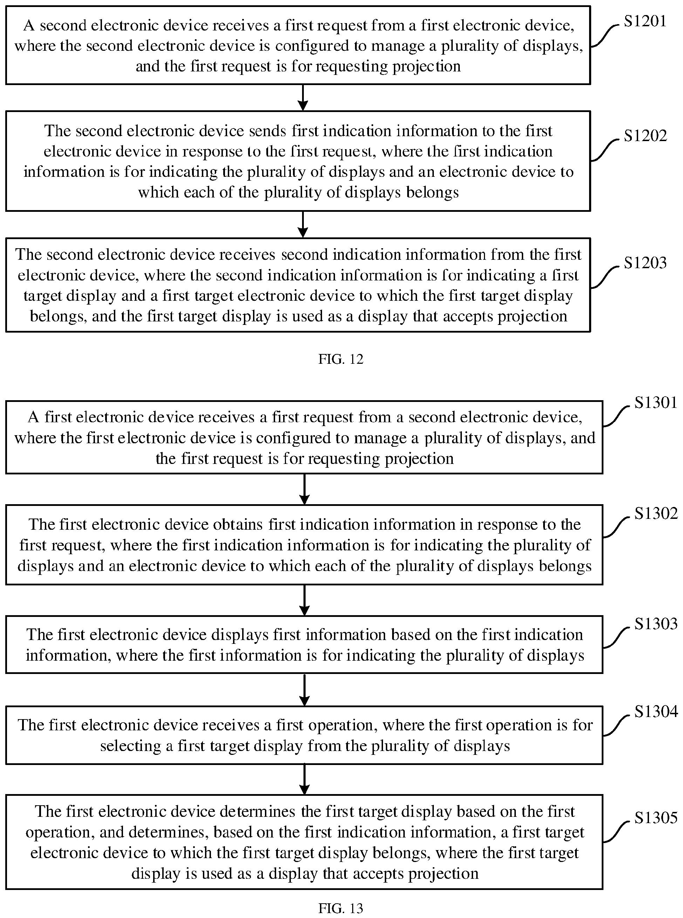

According to the foregoing embodiment and same technical concepts, an embodiment of this application further provides a display selection method. As shown in FIG. 12, the method may include the following steps.

S 1201: A second electronic device receives a first request from a first electronic device, where the second electronic device is configured to manage a plurality of displays, and the first request is for requesting projection.

For the process in which the second electronic device receives the first request from the first electronic device and a related processing process, refer to related descriptions in step S1101 above. Details are not described herein again.

S1202: The second electronic device sends first indication information to the first electronic device in response to the first request, where the first indication information is for indicating the plurality of displays and an electronic device to which each of the plurality of displays belongs.

For the first indication information, refer to related descriptions in step S1102 above. Details are not described herein again.

In some embodiments of this application, for the manner in which the second electronic device obtains the first indication information, refer to descriptions in the display discovery and management method in Phase 1 in the foregoing embodiment. Details are not described herein again.

For the process in which the second electronic device sends the first indication information to the first electronic device and a related processing process, refer to related descriptions in step S1102 above. Details are not described herein again.

S1203: The second electronic device receives second indication information from the first electronic device, where the second indication information is for indicating a first target display and a first target electronic device to which the first target display belongs, and the first target display is used as a display that accepts projection.

For the process in which the second electronic device receives the second indication information from the first electronic device and a related processing process, refer to related descriptions in step S1104 above. Details are not described herein again.

In some embodiments of this application, after determining the first target display and the first target electronic device to which the first target display belongs, the second electronic device may implement effect of projecting content from the first device to the first target display. Specifically, the second electronic device may use first content from the first electronic device as projected content, or may use first content obtained from an address indicated by first address information from the first electronic device as projected content. For the process in which the second electronic device receives the first content or the first address information, refer to related descriptions in step S1104 above. Details are not described herein again.

For example, the first target electronic device may be the target electronic device in the foregoing embodiment.

In some embodiments of this application, in a case in which the second electronic device receives the first content from the first electronic device, when determining that the first target electronic device is the second electronic device, the second electronic device may display the first content on the first target display, or when determining that the first target electronic device is not the second electronic device, the second electronic device may send the first content to the first target electronic device, and indicate the first target electronic device to display the first content on the first target display. For details about the process, specifically refer to the method described in steps S410 to S413 in the foregoing embodiment. Details are not described herein again.

In some embodiments of this application, in a case in which the second electronic device receives the first address information from the first electronic device, when determining that the first target electronic device is the second electronic device, the second electronic device may obtain the first content based on the first address information, and display the first content on the first target display; or when determining that the first target electronic device is not the second electronic device, the second electronic device may send the first address information to the first target electronic device, and indicate the first target electronic device to obtain the first content based on the first address information and display the first content on the first target display. For details about the process, specifically refer to the method described in steps S414 to S417 in the foregoing embodiment. Details are not described herein again.

In some embodiments of this application, after the first electronic device performs projection to the first target display, the second electronic device may assist the first electronic device in changing the display that accepts projection. Specifically, the second electronic device may receive third indication information from the first electronic device, where the third indication information is for indicating to switch to display the first content on a second target display, and the third indication information is further for indicating the second target display and a second target electronic device to which the second target display belongs; and send the first content to the second target electronic device in response to the third indication information, and indicate the second target electronic device to display the first content on the second target display; or send the first address information to the second target electronic device in response to the third indication information, and indicate the second target electronic device to obtain the first content based on the first address information and display the first content on the second target display. For details about the process, refer to related descriptions in the foregoing embodiment. Details are not described herein again.

In some embodiments of this application, in a case in which the first electronic device performs projection to the first target display managed by the second electronic device, the second electronic device may further assist the first electronic device in simultaneously performing projection to a third target display managed by the second electronic device. Specifically, the second electronic device may receive the third indication information from the first electronic device, where the third indication information is for indicating the third target display and a third target electronic device to which the third target display belongs, and the third target display is used as a display that accepts projection. After determining the third target display, the second electronic device may project the corresponding content from the first electronic device to the third target display. For details about the process, refer to related descriptions in the foregoing embodiment. Details are not described herein again.

In some embodiments of this application, in a case in which the first electronic device performs projection to the first target display managed by the second electronic device, the second electronic device may further control another managed display to accept the projection from the first electronic device. Specifically, the second electronic device may receive a second request from a fourth electronic device, where the second request is for requesting projection; send the first indication information to the fourth electronic device in response to the second request; and receive fifth indication information from the fourth electronic device, where the fifth indication information is for indicating a fourth target display and a fourth target electronic device to which the fourth target display belongs, and the fourth target display is used as a display that accepts projection. After determining the fourth target display, the second electronic device may project the corresponding content from the first electronic device to the fourth target display. For specific execution of the process, refer to the process in which the first target display managed by the second electronic device accepts the projection from the first electronic device in the foregoing embodiment. Details are not described herein again.

In the foregoing method, for specific steps performed by the second electronic device, refer to related descriptions in the foregoing embodiment. Details are not described herein again.

According to the foregoing embodiment and same technical concepts, an embodiment of this application further provides a display selection method. As shown in FIG. 13, the method may include the following steps.

S1301: A first electronic device receives a first request from a second electronic device, where the first electronic device is configured to manage a plurality of displays, and the first request is for requesting projection.

For example, the first electronic device in this step may be the second electronic device in the foregoing embodiment, and the second electronic device in this step may be the first electronic device in the foregoing embodiment.

For specific execution of this step, refer to descriptions in step S1201 above. Details are not described herein again.

S1302: The first electronic device obtains first indication information in response to the first request, where the first indication information is for indicating the plurality of displays and an electronic device to which each of the plurality of displays belongs.

For the first indication information and the method for obtaining the first indication information by the first electronic device, refer to descriptions in the display discovery and management method in Phase 1 in the foregoing embodiment. Details are not described herein again.

S1303: The first electronic device displays first information based on the first indication information, where the first information is for indicating the plurality of displays.

For specific execution of this step, refer to descriptions in step S1103 above. Details are not described herein again.

S1304: The first electronic device receives a first operation, where the first operation is for selecting a first target display from the plurality of displays.

For specific execution of this step, refer to descriptions of related processing in step S1104 above. Details are not described herein again.

S1305: The first electronic device determines the first target display based on the first operation, and determines, based on the first indication information, a first target electronic device to which the first target display belongs, where the first target display is used as a display that accepts projection.

For specific execution of this step, refer to descriptions of related processing in step S1203 above. Details are not described herein again.

In the foregoing method, for specific steps performed by the first electronic device, refer to related descriptions in the foregoing embodiment. Details are not described herein again.

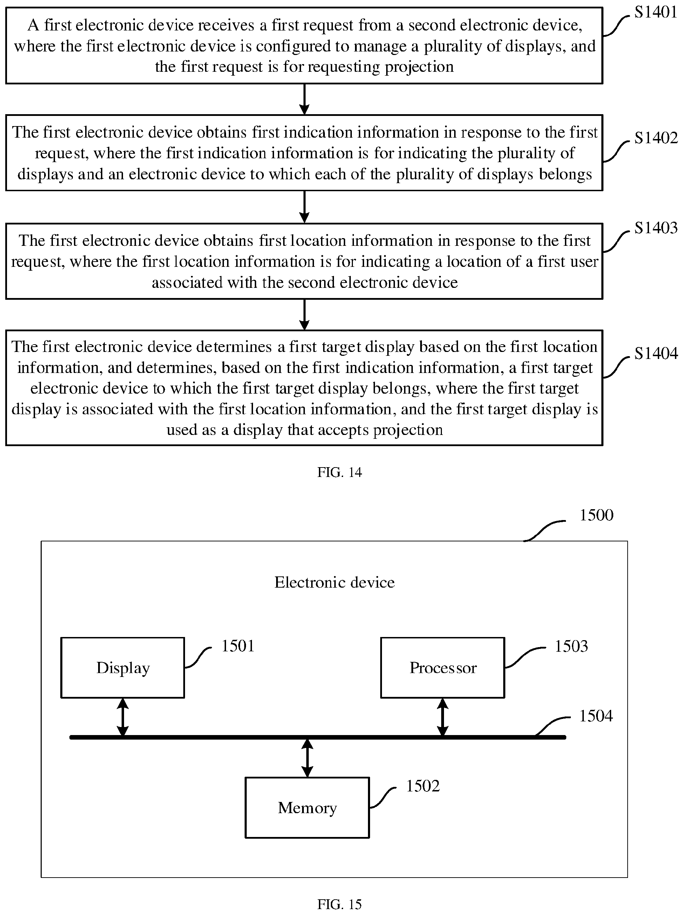

According to the foregoing embodiment and same technical concepts, an embodiment of this application further provides a display selection method. As shown in FIG. 14, the method may include the following steps.

S1401: A first electronic device receives a first request from a second electronic device, where the first electronic device is configured to manage a plurality of displays, and the first request is for requesting projection.

For specific execution of this step, refer to descriptions in step S1201 above. Details are not described herein again.

S1402: The first electronic device obtains first indication information in response to the first request, where the first indication information is for indicating the plurality of displays and an electronic device to which each of the plurality of displays belongs.

For the processing process of this step and specific execution of a related processing process, refer to descriptions in step S1302 above. Details are not described herein again.

S1403: The first electronic device obtains first location information in response to the first request, where the first location information is for indicating a location of a first user associated with the second electronic device.

S1404: The first electronic device determines a first target display based on the first location information, and determines, based on the first indication information, a first target electronic device to which the first target display belongs, where the first target display is associated with the first location information, and the first target display is used as a display that accepts projection.

For example, the first user may be the user at the driver seat in the foregoing embodiment. In this case, the first location information may be information for indicating the seat of the user at the driver seat, and the first target display may be the driver screen in the foregoing embodiment.

For the specific execution process of steps S1403 and S1404, refer to descriptions of the method for automatically selecting the target display in the foregoing embodiment. Details are not described herein again.

In the foregoing method, for specific steps performed by the first electronic device, refer to related descriptions in the foregoing embodiment. Details are not described herein again.

According to the foregoing embodiment and same concepts, an embodiment of this application further provides an electronic device. The electronic device may be configured to implement the method applied to the first electronic device or the second electronic device according to embodiments of this application. As shown in FIG. 15, the electronic device 1500 may include a display 1501, a memory 1502, one or more processors 1503, and one or more computer programs (not shown in the figure). The foregoing components may be coupled through one or more communication buses 1504.

The display 1501 is configured to display a related user interface such as an application interface.

The memory 1502 stores one or more computer programs (codes), and the one or more computer programs include computer instructions. The one or more processors 1503 invoke the computer instructions stored in the memory 1502, so that the electronic device 1500 performs the method applied to the first electronic device or the second electronic device provided in embodiments of this application.

During specific implementation, the memory 1502 may include a high-speed random access memory, and may also include a nonvolatile memory such as one or more magnetic disk storage devices, a flash memory device, or another nonvolatile solid-state storage device. The memory 1502 may store an operating system (which is a system for short below), for example, an embedded operating system such as Android, iOS, Windows, or Linux. The memory 1502 may be configured to store an implementation program in this embodiment of this application. The memory 1502 may further store a network communication program. The network communication program may be configured to communicate with one or more additional devices, one or more user equipments, or one or more network devices.

The one or more processors 1503 may be a general-purpose central processing unit (Central Processing Unit, CPU), a microprocessor, an application-specific integrated circuit (Application-Specific Integrated Circuit, ASIC), or one or more integrated circuits configured to control program execution in the solutions of this application.

It should be noted that FIG. 15 is merely an implementation of the electronic device 1500 provided in this embodiment of this application. During actual application, the electronic device 1500 may further include more or fewer components. This is not limited herein.

It should be understood that the solutions in embodiments of this application may be properly combined for use, and explanations or descriptions of terms in embodiments may be cross-referenced or explained in embodiments. This is not limited.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

According to the foregoing embodiments and same concepts, an embodiment of this application further provides a computer-readable storage medium. The computer-readable storage medium stores a computer program. When the computer program is run on a computer, the computer is enabled to perform the method applied to the first electronic device or the second electronic device according to the foregoing embodiments.

According to the foregoing embodiments and same concepts, an embodiment of this application further provides a computer program product. The computer program product includes a computer program or instructions. When the computer program or the instructions are run on a computer, the computer is enabled to perform the method applied to the first electronic device or the second electronic device according to the foregoing embodiments.

All or some of the methods in embodiments of this application may be implemented by using software, hardware, firmware, or any combination thereof. When the software is used to implement embodiments, all or some of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, a user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application. In this way, this application is intended to cover these modifications and variations of this application provided that they fall within the scope of protection defined by the following claims and their equivalent technologies.

## Claims

1. A display selection method, applied to a first electronic device, wherein the method comprises:
sending a first request to a second electronic device in response to a received first operation, wherein the second electronic device is configured to manage a plurality of displays, and the first request is for requesting projection;
receiving first indication information from the second electronic device, wherein the first indication information is for indicating the plurality of displays and an electronic device to which each of the plurality of displays belongs;
displaying first information based on the first indication information, wherein the first information is for indicating the plurality of displays; and
sending second indication information to the second electronic device in response to a received second operation, wherein the second operation is for selecting a first target display from the plurality of displays, the second indication information is for indicating the first target display and a first target electronic device to which the first target display belongs, and the first target display is used as a display that accepts projection.

2. The method according to claim 1, wherein before the receiving first indication information from the second electronic device, the method further comprises:
establishing a wireless communication connection to the second electronic device based on a first communication protocol, wherein the first communication protocol is a digital living network alliance DLNA projection protocol or a wireless projection protocol;
the receiving first indication information from the second electronic device comprises:
receiving a first message sent by the second electronic device according to the first communication protocol, wherein the first message comprises a first target field for carrying the first indication information; and
determining the first indication information based on the first target field in the first message; and
the sending second indication information to the second electronic device comprises:
sending a second message to the second electronic device according to the first communication protocol, wherein the second message comprises a second target field for carrying the second indication information.

3. The method according to claim 1 or 2, wherein before the receiving first indication information from the second electronic device, the method further comprises:
establishing a wired communication connection to the second electronic device based on a first transmission line;
the receiving first indication information from the second electronic device comprises:
receiving the first indication information sent by the second electronic device through the first transmission line; and
the sending second indication information to the second electronic device comprises:
sending the second indication information to the second electronic device through the first transmission line.

4. The method according to any one of claims 1 to 3, wherein
the plurality of displays belong to the second electronic device; or
the plurality of displays comprise at least one display of the second electronic device, and a display of at least one other electronic device that establishes a communication connection to the second electronic device.

5. The method according to any one of claims 1 to 4, wherein the first indication information comprises a correspondence between display indication information and display identification information of each of the plurality of displays, display indication information of any display is for indicating the display, and display identification information of any display is for indicating the display and an electronic device to which the display belongs; and
the second indication information comprises display identification information of the first target display.

6. The method according to any one of claims 1 to 5, wherein before the sending a first request to a second electronic device in response to a received first operation, the method further comprises:
displaying first content on a first display; and
after the sending second indication information to the second electronic device in response to a received second operation, the method further comprises:
skipping displaying the first content on the first display; and
sending the first content to the second electronic device, wherein the first content is used by the first target electronic device to display the first content on the first target display; or
sending first address information to the second electronic device, wherein the first address information is for indicating to obtain an address of the first content, and the address of the first content is used by the first target electronic device to obtain the first content and display the first content on the first target display.

7. The method according to claim 6, wherein after the sending the first content to the second electronic device, or after the sending first address information to the second electronic device, the method further comprises:
displaying second information on the first display in response to a received third operation, wherein the second information is for indicating at least one display, and the at least one display comprises a display in the plurality of displays except the first target display; and
sending third indication information to the second electronic device in response to a received fourth operation, wherein the fourth operation is for selecting a second target display from the at least one display, the third indication information is for indicating to switch to display the first content on the second target display, and the third indication information is further for indicating the second target display and a second target electronic device to which the second target display belongs.

8. The method according to any one of claims 1 to 7, wherein after the receiving first indication information from the second electronic device, the method further comprises:
displaying the first information in response to a received fifth operation; and
sending the third indication information to the second electronic device in response to a received sixth operation, wherein the sixth operation is for selecting a third target display from the plurality of displays, the third indication information is for indicating the third target display and a third target electronic device to which the third target display belongs, and the third target display is used as a display that accepts projection.

9. The method according to any one of claims 1 to 8, wherein the method further comprises:
sending a second request to a third electronic device in response to a received seventh operation, wherein the third electronic device is configured to manage a plurality of displays, and the second request is for requesting projection;
receiving fourth indication information from the third electronic device, wherein the fourth indication information is for indicating the plurality of displays managed by the third electronic device and an electronic device to which each display belongs;
displaying third information based on the fourth indication information, wherein the third information is for indicating the plurality of displays managed by the third electronic device; and
sending fifth indication information to the third electronic device in response to a received eighth operation, wherein the eighth operation is for selecting a fourth target display from the plurality of displays managed by the third electronic device, the fifth indication information is for indicating the fourth target display and a fourth target electronic device to which the fourth target display belongs, and the fourth target display is used as a display that accepts projection.

10. The method according to any one of claims 1 to 9, wherein the second electronic device is an electronic device located in a vehicle cockpit, and/or the first target electronic device is an electronic device located in the vehicle cockpit.

11. A display selection method, applied to a second electronic device, wherein the method comprises:
receiving a first request from a first electronic device, wherein the second electronic device is configured to manage a plurality of displays, and the first request is for requesting projection;
sending first indication information to the first electronic device in response to the first request, wherein the first indication information is for indicating the plurality of displays and an electronic device to which each of the plurality of displays belongs; and
receiving second indication information from the first electronic device, wherein the second indication information is for indicating a first target display and a first target electronic device to which the first target display belongs, and the first target display is used as a display that accepts projection.

12. The method according to claim 11, wherein before the receiving a first request from a first electronic device, the method further comprises:
establishing a wireless communication connection to the first electronic device based on a first communication protocol, wherein the first communication protocol is a DLNA projection protocol or a wireless projection protocol;
the sending first indication information to the first electronic device comprises:
sending a first message to the first electronic device according to the first communication protocol, wherein the first message comprises a first target field for carrying the first indication information; and
the receiving second indication information from the first electronic device comprises:
receiving a second message sent by the first electronic device according to the first communication protocol, wherein the second message comprises a second target field for carrying the second indication information; and
determining the second indication information based on the second target field in the second message.

13. The method according to claim 11 or 12, wherein before the receiving a first request from a first electronic device, the method further comprises:
establishing a wired communication connection to the first electronic device based on a first transmission line;
the sending first indication information to the first electronic device comprises:
sending the first indication information to the first electronic device through the first transmission line; and
the receiving second indication information from the first electronic device comprises:
receiving the second indication information sent by the first electronic device through the first transmission line.

14. The method according to any one of claims 11 to 13, wherein
the plurality of displays belong to the second electronic device; or
the plurality of displays comprise at least one display of the second electronic device, and a display of at least one other electronic device that establishes a communication connection to the second electronic device.

15. The method according to any one of claims 11 to 14, wherein the first indication information comprises a correspondence between display indication information and display identification information of each of the plurality of displays, display indication information of any display is for indicating the display, and display identification information of any display is for indicating the display and an electronic device to which the display belongs; and
the second indication information comprises display identification information of the first target display.

16. The method according to any one of claims 11 to 15, wherein after the receiving second indication information from the first electronic device, the method further comprises:
determining the first target display and the first target electronic device based on the second indication information; and
receiving first content from the first electronic device, wherein the first content is used by the first target electronic device to display the first content on the first target display; or
receiving first address information from the first electronic device, wherein the first address information is for indicating to obtain an address of the first content, and the address of the first content is used by the first target electronic device to obtain the first content and display the first content on the first target display.

17. The method according to claim 16, wherein after the receiving first content from the first electronic device, the method further comprises:
when the first target electronic device is the second electronic device, displaying the first content on the first target display; or
when the first target electronic device is not the second electronic device, sending the first content to the first target electronic device, and indicating the first target electronic device to display the first content on the first target display.

18. The method according to claim 16, wherein after the receiving first address information from the first electronic device, the method further comprises:
when the first target electronic device is the second electronic device, obtaining the first content based on the first address information, and displaying the first content on the first target display; or
when the first target electronic device is not the second electronic device, sending the first address information to the first target electronic device, and indicating the first target electronic device to obtain the first content based on the first address information and display the first content on the first target display.

19. The method according to any one of claims 16 to 18, wherein after the receiving first content from the first electronic device, or after the receiving first address information from the first electronic device, the method further comprises:
receiving third indication information from the first electronic device, wherein the third indication information is for indicating to switch to display the first content on a second target display, and the third indication information is further for indicating the second target display and a second target electronic device to which the second target display belongs; and
sending the first content to the second target electronic device in response to the third indication information, and indicating the second target electronic device to display the first content on the second target display; or sending the first address information to the second target electronic device in response to the third indication information, and indicating the second target electronic device to obtain the first content based on the first address information and display the first content on the second target display.

20. The method according to any one of claims 11 to 19, wherein after the sending first indication information to the first electronic device, the method further comprises:
receiving the third indication information from the first electronic device, wherein the third indication information is for indicating a third target display and a third target electronic device to which the third target display belongs, and the third target display is used as a display that accepts projection.

21. The method according to any one of claims 11 to 20, wherein the method further comprises:
receiving a second request from a fourth electronic device, wherein the second request is for requesting projection;
sending the first indication information to the fourth electronic device in response to the second request; and
receiving fifth indication information from the fourth electronic device, wherein the fifth indication information is for indicating a fourth target display and a fourth target electronic device to which the fourth target display belongs, and the fourth target display is used as a display that accepts projection.

22. The method according to any one of claims 11 to 21, wherein the second electronic device is an electronic device located in a vehicle cockpit, and/or the first target electronic device is an electronic device located in the vehicle cockpit.

23. An electronic device, wherein the electronic device comprises a display, a memory, and one or more processors; and
the memory is configured to store computer program code, and the computer program code comprises computer instructions; and when the computer instructions are executed by the one or more processors, the electronic device is enabled to perform the method according to any one of claims 1 to 10, or perform the method according to any one of claims 11 to 22.

24. A computer-readable storage medium, wherein the computer-readable storage medium stores a computer program; and when the computer program is run on a computer, the computer is enabled to perform the method according to any one of claims 1 to 10, or perform the method according to any one of claims 11 to 22.

25. A computer program product comprising instructions, wherein when the computer program product is run on an electronic device, the electronic device is enabled to perform the method according to any one of claims 1 to 10, or perform the method according to any one of claims 11 to 22.
